Europäisches Patentamt

European Patent Office

Office européen des brevets

(11) Veröffentlichungsnummer : **0 101 889**
**B1**

(12) **EUROPÄISCHE PATENTSCHRIFT**

(45) Veröffentlichungstag der Patentschrift :
06.05.87

(51) Int. Cl.⁴ : **C 11 B  3/12**, B 01 D  3/28,
B 01 D  1/22, C 07 C  67/54

(21) Anmeldenummer : 83107122.0

(22) Anmeldetag : 20.07.83

(54) Verfahren und Anlage zum Desodorieren und/oder Entsäuern von Speiseölen, Fetten und Estern.

(30) Priorität : 23.07.82 DE 3227669

(43) Veröffentlichungstag der Anmeldung :
07.03.84 Patentblatt 84/10

(45) Bekanntmachung des Hinweises auf die Patenterteilung : 06.05.87 Patentblatt 87/19

(84) Benannte Vertragsstaaten :
BE DE FR GB IT NL SE

(56) Entgegenhaltungen :
DE-A- 2 352 859
GB-A- 2 046 606

(73) Patentinhaber : Stage, Hermann, Dr.
Ludgeristrasse 9
D-4400 Münster (DE)

(72) Erfinder : Stage, Hermann, Dr.
Ludgeristrasse 9
D-4400 Münster (DE)

(74) Vertreter : Brehm, Hans-Peter, Dr. Dipl.-Chem. et al
Patentanwälte Tischer, Kern & Brehm Albert-Ross-
haupter-Strasse 65
D-8000 München 70 (DE)

EP 0 101 889 B1

## Beschreibung

Die Erfindung betrifft das Desodorieren und/oder Entsäuern von hochsiedenden Flüssigkeiten, nämlich Speiseölen, Fetten und Estern, nach dem Prinzip der kontinuierlichen Gegenstrom-Fallfilm-Treibdampfdestillation in einem von außen aufgezwungenen Temperaturfeld. Hierzu sieht die Erfindung ein neues Verfahren und eine neue Anlage zur Durchführung des Verfahrens vor.

Im einzelnen betrifft die Erfindung ein Verfahren zum Desodorieren und/oder Entsäuern von hochsiedenden Flüssigkeiten, nämlich Speiseölen, Fetten und Estern, wobei die auf 220 bis 280 °C erwärmte Flüssigkeit unter einem Arbeitsdruck zwischen 2 und 10 mbar als Dünnschicht einer Schichtdicke kleiner 1,0 mm an der Wand von vertikal angeordneten, Rieselkanäle bildenden Flächen herabfließt, von denen wenigstens ein Teil auf einer höheren Temperatur als die herabfließende Flüssigkeit gehalten wird, und im Gegenstrom Dampf einer niedermolekularen Flüssigkeit durch diese Rieselkanäle geführt wird.

Ein Verfahren dieser Art und eine zur Durchführung des Verfahrens geeignete Anlage ist aus der DE-A 29 14 101 bekannt. Beim bekannten Verfahren ist eine einzige Gegenstrom-Fallfilm-Treibdampfdestillations-Zone vorgesehen, die innerhalb einer als Rohrbündelkolonne ausgebildeten Fallfilmkolonne realisiert ist. Vom Verteiler dieser Rohrbündelkolonne fließt die Flüssigkeit an der Innenwand der Rieselkanäle herab, die einen Innendurchmesser von 34 bis 72 mm aufweisen. Das zu entsäuernde bzw. zu desodorierende Öl fließt als Dünnschicht einer Schichtstärke von etwa 0,4 mm mit einer Zulauftemperatur von 250 °C im Gegenstrom zum von unten aufsteigenden Treibdampfstrom bei einem Arbeitsdruck im Kopf der Fallfilmkolonne von 5,33 mbar herab. Jener bekannte Vorschlag brachte eine erhebliche Verbesserung gegenüber den damals vorbekannten Vorschlägenwie das im einzelnen dem Beitrag « Heutiger Entwicklungsstand der Anlagen zur physikalischen Raffination pflanzlicher Öle » in Seifen, Öle, Fette, Wachse *105*, Seiten 395-401, 427-433, 473-475 und 531-535 (1979) zu entnehmen ist — indem der Anteil an freien Fettsäuren und anderen Leichtsiedern im behandelten Speiseöl auf 0,03 Gew-% abgesenkt werden kann, wozu lediglich eine Treibdampfmenge von 8 kg/Tonne behandeltes Speiseöl erforderlich war.

Es ist bereits früher bekannt geworden (vgl. Kaufmann : « Neuzeitliche Fette und Fettprodukte », 5. Lieferung (1968), S. 727, 728), die entsäuernde Dämpfung von Speiseölen in zwei getrennten Destillierkolonnen durchzuführen. Im einzelnen wird das Öl durch eine Verteilungseinrichtung gleichmäßig verteilt und fließt dann in dünner Schicht über die Rieselbänder nach unten. Während der Berieselung wird eine Gegenstrom-Berührung mit den aus der zweiten Destillier-Kolonne austretenden Brüden hergestellt. Das sich im Sumpf der ersten Destillier-Kolonne ansammelnde Öl wird mittels einer Pumpe kontinuierlich abgezogen und über einen Vorwärmer in eine zweite Destillierkolonne geleitet, in welche der Trägerdampf von unten eintritt. Eine Beheizung der beiden Destillierkolonnen ist nicht vorgesehen, so daß es über deren Länge infolge von Verdampfungsvorgängen jeweils zu einem Temperaturabfall kommen wird. Der angegebene Dampf-Gesamtverbrauch von 200 bis 300 kg pro Tonne behandeltes Öl ist für ein modernes Verfahren der oben angegebenen Art zu hoch.

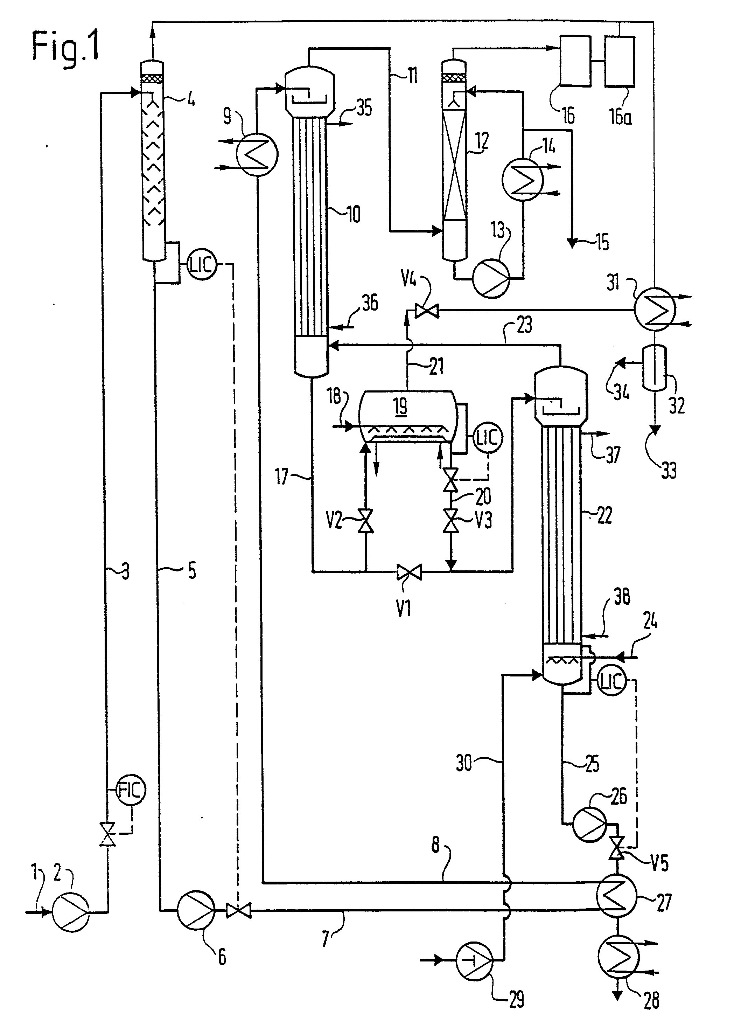

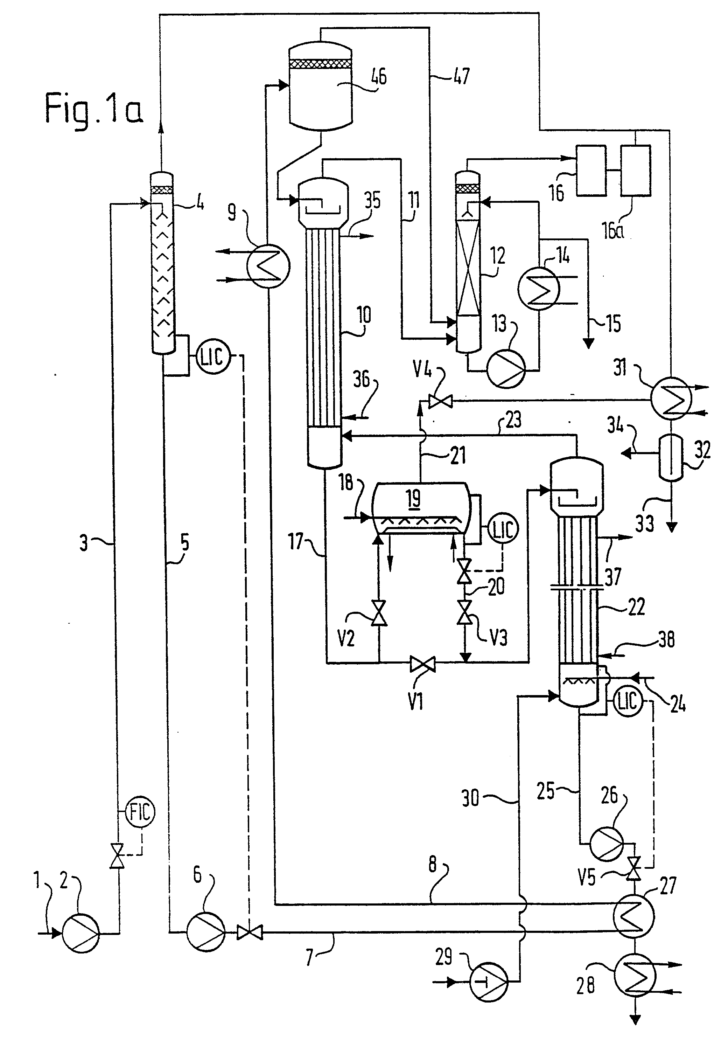

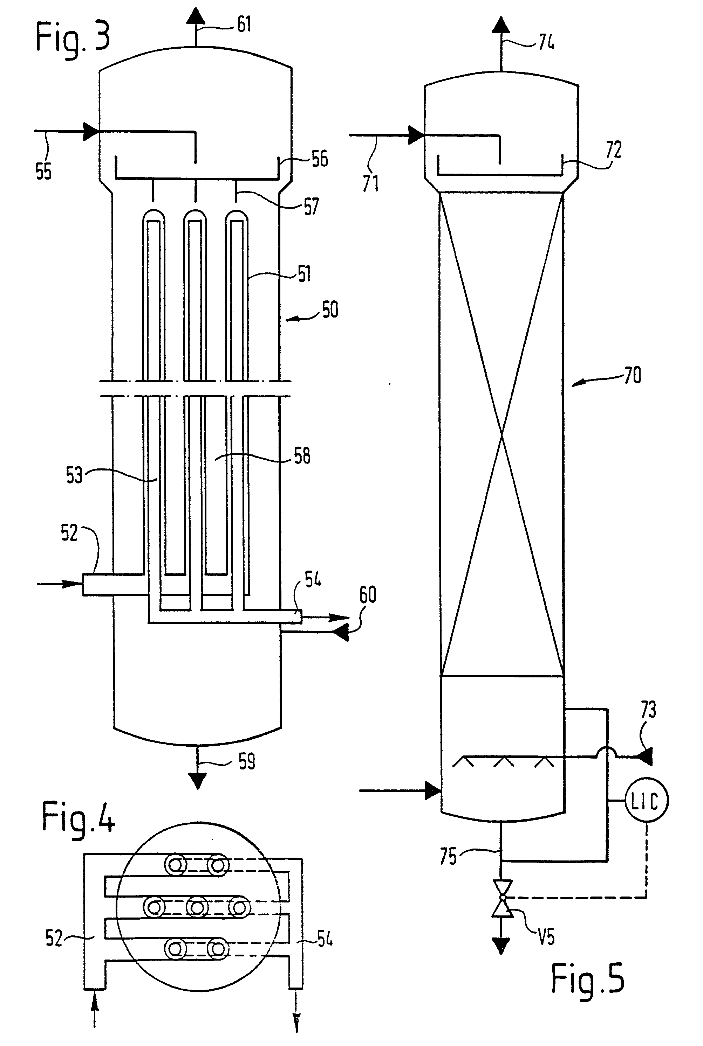

Ferner ist aus der DE-B-1 087 305 ein kontinuierliches Gegenstromverfahren zum Desodorieren von Fetten und Ölen bekannt, das beispielsweise in einer typischen Bodenkolonne durchgeführt wird. Im einzelnen kann in einer im allgemeinen senkrecht stehenden Reinigungskolonne gearbeitet werden, in der Anordnungen für eine Berührung von Dampf und Flüssigkeit vorhanden sind, in welche das zu desodorierende Öl kontinuierlich oben eingeleitet und das desodorierte Öl unten kontinuierlich abgezogen wird, und in welche die Reinigungsdämpfe unten eingeleitet und aus welcher der Dampf und das verflüchtigte Material oben unter merklicher Abnahme des Absolutdruckes in der Kolonne abgezogen wird (Spalte 3, Z. 3-13). Gerade weil mit typischen Bodenkolonnen gearbeitet wird, wie sie beispielsweise in den Fig. 1 und 4 dargestellt sind, muß mit einem hohen Druckverlust zwischen dem Kopf und dem Sumpf der Kolonne gerechnet werden. Aus der tabellarischen Zusammenstellung in Spalte 8 ist zu entnehmen, daß Druckverluste von etwa 34 Torr, also etwa 44 mbar auftreten. Unter der Voraussetzung dieser hohen Druckverluste wird der Vorschlag gemacht, das Verfahren so zu führen, daß das durch die Flächeneinheit der Dampfdurchtrittsöffnungen strömende Dampfvolumen annähernd konstant gehalten wird, wozu die Anwendung einer sich nach oben erweiternden Kolonne vorgeschlagen wird.

Der Treibdampfbedarf ist von entscheidendem Einfluß für die Wirtschaftlichkeit eines Verfahrens der oben angegebenen Art, weil die eingesetzte Treibdampfmenge von dem Vakuumaggregat weggeführt werden muß, und deshalb den Dampfbedarf der Vakuumanlage entscheidend beeinflußt ; in der Praxis rechnet man bei modernen Anlagen, daß bei einer Kühlwasser-Eintrittstemperatur von 25 °C der Dampfverbrauch in der Vakuumanlage etwa das Sechs- bis Acht-fache der Treibdampfmenge ausmacht.

Ausgehend von einem Verfahren der eingangs genannten Art besteht die Aufgabe der vorliegenden Erfindung darin, in einem einzigen fortlaufenden Verfahrensablauf den Anteil an freien Fettsäuren und anderen Leichtsiedern im Endprodukt auf wenigstens 0,03 Gew.-% abzusenken, dabei den Treibdampfbedarf gegenüber dem aus der DE-A-29 14 101 bekannten Verfahren noch weiter zu verringern und den Gesamtenergiebedarf pro Tonne Fertigöl erheblich abzusenken. Weiterhin soll eine Anlage zur Durchführung dieses verbesserten Verfahrens bereitgestellt werden.

Die erfindungsgemäße Lösung dieser Aufgabe ist ein Verfahren mit den in Anspruch 1 angegebenen Maßnahmen bzw. eine Anlage mit den in Anspruch 17 angegebenen Merkmalen. Vorteilhafte Ausgestaltungen und Weiterbildungen der Erfindung ergeben sich aus den Unteransprüchen.

Im einzelnen besteht die erfindungsgemäße Weiterbildung des eingangs genannten Verfahrens darin, daß wenigstens zwei hintereinander arbeitende und untereinander in Dampf- und Flüssigkeitsleitung stehende Gegenstrom-Fallfilm-Treibdampfdestillations-Zonen vorgesehen sind, von denen die in Richtung der herabfließenden Flüssigkeit stromabwärts gelegene Schlußzone kleinere hydraulische Rieselkanal-Durchmesser oder deren Äquivalent bei nicht-rohrförmigen Rieselkanälen aufweist, als die weiter stromaufwärts gelegene(n) Anfangszone(n), und die Treibdampfzuführung ausschließlich im Sumpf der Schlußzone erfolgt.

Die erfindungsgemäße Anlage zur Durchführung dieses Verfahrens sieht wenigstens zwei verschiedene, hintereinander arbeitende und untereinander durch Dampf- und Flüssigkeitsleitung verbundene Fallfilmkolonnen vor, von denen die in Fließrichtung der Flüssigkeit weiter stromaufwärts gelegene(n) Fallfilmkolonne(n) — innerhalb der die Anfangszone der Gegenstrom-Fallfilm-Treibdampfdestillationszonen realisiert ist — Rieselkanäle mit einem hydraulischen Durchmesser von 73 bis 150 mm oder dessen Äquivalent bei nichtrohrförmigen Rieselkanälen aufweist. Demgegenüber weist die weiter stromabwärts gelegene Fallfilmkolonne, innerhalb der die Schlußzone der Gegenstrom-Fallfilm-Treibdampfdestillations-Zonen realisiert ist, Rieselkanäle mit einem hydraulischen Durchmesser von 25 bis 33 mm oder dessen Äquivalent bei nicht-rohrförmigen Rieselkanälen auf. Vorzugsweise ist für die stromaufwärts gelegene Fallfilmkolonne eine Länge der Rieselkanäle von 2 bis 6 m und für die stromabwärts gelegene Fallfilmkolonne eine Länge der Rieselkanäle von 6 bis 10 m vorgesehen.

Dieser wesentliche Gesichtspunkt der Erfindung beruht auf der überraschenden Beobachtung, daß die Entsäuerung und/oder Desodorierung von Speiseölen, Fetten und Estern nach dem Prinzip der kontinuierlichen Gegenstrom-Fallfilm-Treibdampfdestillation in einem von außen aufgezwungenen Temperaturfeld nicht linear erfolgt. Die nachstehenden Ausführungen beziehen sich speziell auf das Desodorieren und/oder Entsäuern von Palmöl, doch lassen sich die grundlegenden Erfahrungen zwanglos auch auf andere Triglyzeride und dgl. übertragen. Zumeist weist das zu entsäuernde Palmöl einen Anteil an freien Fettsäuren und anderen Leichtsiedern in der Größenordnung von etwa 5 Gew.-% auf. Erfindungsgemäß wurde erkannt, daß zur Verringerung des Anteils der zu entfernenden, gegenüber dem Palmöl wesentlich leichter flüchtigen Komponenten bis auf etwa 10 % ihres Ursprungsgehalts maximal nur zwei theoretische Trennstufen erforderlich sind, die sich unter den genannten Arbeitsbedingungen bereits mit 2 bis 6 m Austauschlänge in Strömungskanälen mit einem hydraulischen Durchmesser von 73 bis 150 mm Durchmesser erreichen lassen. Vorzugsweise kommt man in dieser Anfangszone bereits mit einer Austauschlänge von etwa 3 bis 5 m aus.

Diese Anfangszone kann in zwei Teilzonen unterteilt sein, für welche Teilzonen dann unterschiedliche hydraulische Rieselkanaldurchmesser oder deren Äquivalent bei nichtrohrförmigen Rieselkanälen vorgesehen werden. In diesem Falle soll die unmittelbar an die Flüssigkeitsaufgabe anschließende, erste Teilzone Rieselkanäle mit einem hydraulischen Durchmesser von 120 bis 150 mm und die daran anschließende zweite Teilzone Rieselkanäle mit einem hydraulischen Durchmesser von 73 bis 120 mm bzw. deren Äquivalent bei nicht-rohrförmigen Rieselkanälen aufweisen. Mit einer solchen, insgesamt drei-zonigen Verfahrensführung kann eine noch weitere Absenkung des Druckverlustes erzielt werden. Darüberhinaus eignet sich diese drei-zonige Verfahrensführung insbesondere für die Entsäuerung von Speiseölen mit besonders hohem Gehalt an freien Fettsäuren von etwa 4 bis 10 Gew.-%. Im Falle der dreizonigen Verfahrensführung soll die erste Teilzone ca. 1 theoretische Trennstufe gewährleisten und die anschließende zweite Teilzone wenigstens 1, vorzugsweise 1 bis 2 theoretische Trennstufen gewährleisten.

Zur Abtrennung der verbleibenden restlichen Verunreinigungen bis auf einen Restsäuregehalt kleiner 0,03 Gew.-%, vorzugsweise kleiner 0,02 Gew.-% werden in der nachgeschalteten Schlußzone sechs bis acht theoretische Trennstufen benötigt, die sich unter den genannten Bedingungen sehr gut mit Strömungskanälen eines hydraulischen Durchmessers von 25 bis 33 mm bei einer Austauschlänge von 6 bis 10 m, vorzugsweise von etwa 8 m verwirklichen lassen.

Die Neuverteilung des Öles auf die Rieselkanäle der Schlußzone erhöht die Wirksamkkeit der dort stattfindenden Restentsäuerung noch weiter.

Nach einem weiteren wichtigen Gesichtspunkt der Erfindung wird der Druckverlust zwischen dem Sumpf der Schlußzone und dem Kopf der ersten Anfangszone kleiner 2,0 mbar, vorzugsweise kleiner 1,4 mbar gehalten. Hierdurch kann beim minimalen Treibdampfeinsatz ein Maximum an Austreibsarbeit geleistet werden.

Nach einem weiteren Gesichtspunkt der Erfindung werden nicht nur die Rieselkanaldurchmesser oder deren Äquivalente bei nicht-rohrförmigen Rieselkanälen gezielt an die jeweiligen Anforderungen angepaßt, die einerseits für die Haupt- oder Grobabtrennung der Verunreinigungen in der Anfangs-Gegenstrom-Fallfilm-Treibdampfdestillations-Zone und andererseits für die Rest- oder Feinabtrennung in der Schluß-Gegenstrom-Fallfilm-Treibdampfdestillations-Zone erforderlich sind, sondern nach diesem weiteren Gesichtspunkt der Erfindung können an diese Anforderungen auch die Fließbedingungen der Flüssigkeit angepaßt werden.

Der zulässige Druckverlust in der Schlußzone bestimmt dort die Gesamt-Umfangslänge der Rieselkanäle. In der bzw. den weiter stromaufwärts gelegenen Anfangszone(n) muß die Gesamt-Umfangslänge der Rieselkanäle wenigstens gleich groß sein, wird jedoch vorzugsweise von Zone zu Zone größer bemessen, so daß die zur Flüssigkeitsaufgabe benachbarte Zone die größte Gesamt-Umfangslänge aufweist. Die Obergrenze der Gesamt-Umfangslänge in dieser Zone wird dahingehend gewählt, daß dort die Reynolds-Zahl der Flüssigkeit nicht unter 200 liegt.

Erfindungsgemäß ergeben sich besonders günstige Strömungs- und Austauschverhältnisse für einerseits den Flüssigkeitsfilm und andererseits die Dämpfeströmung dann, wenn der Flüssigkeitsdurchsatz durch jede Zone praktisch gleich ist und im Falle der Entsäuerung pro Stunde 0,4 bis 1,6 m³ und vorzugsweise 0,7 bis 0,9 m³ Flüssigkeit pro m Gesamt-Umfangslänge der Rieselkanäle ausmacht. Für den Fall, daß nach dem erfindungsgemäßen Verfahren lediglich eine Desodorierung durchgeführt werden soll — beispielsweise weil die Flüssigkeit schon auf chemischem Wege entsäuert worden ist — können höhere Werte vorgesehen werden ; in diesem Fall kann der Flüssigkeitsdurchsatz 0,8 bis 2,4 m³/m · h und vorzugsweise 1,4 bis 1,8 m³/m · h ausmachen.

Ausgehend von diesen Belastungswerten der Rieselkanalwände und unter Berücksichtigung obiger Ausführungen zur Gesamt-Umfangslänge wird zur Entsäuerung in der Anfangszone die Schichtdicke des Flüssigkeitsfilms zwischen 0,20 und 0,50 mm, vorzugsweise zwischen 0,35 bis 0,45 mm gehalten. Wird lediglich eine Desodorierung durchgeführt, kann die Schichtdicke in der Anfangszone bis auf 0,6 mm ansteigen. Demgegenüber wird in der Schlußzone die Schichtdicke des Flüssigkeitsfilms zwischen 0,30 und 0,60 mm und vorzugsweise zwischen 0,35 und 0,50 mm gehalten. Generell sind innerhalb dieser Schichtdickenbereiche die kleineren Schichtdickenwerte für die Entsäuerung und die größeren Schichtdickenwerte für die Desodorierung zweckmäßig.

Nach einem weiteren Gesichtspunkt der Erfindung werden in der Anfangszone, gegebenenfalls auch in deren Teilzonen und in der Schlußzone solche Fließbedingungen vorgesehen, daß der herabrieselnde Flüssigkeitsfilm von Zone zu Zone grössere Reynolds-Zahlen Re aufweist. Bekanntlich ist die Reynolds-Zahl Re einer Flüssigkeit definiert als :

$$Re = \frac{V \cdot \gamma_F \cdot \iota}{\nu \cdot g} = \frac{G_F \cdot 10\,000}{c_P \cdot 2.02 \cdot 9,81}$$

wobei die verschiedenen Symbole nachstehende Bedeutung haben :

V = Flüssigkeitsvolumen (m³)
$\gamma_F$ = Flüssigkeitsdichte (kg/m³)
$\iota$ = charakteristische Länge (m)
$\nu$ = Viskosität ($c_P \cdot 1,02$)/10 000
g = Erdbeschleunigung (9,81 m/sec²)
$G_F$ = (Volumen · $\gamma_F$)/(Rohrzahl · Innendurchmesser · $\pi$ · 3 600)
cP = Viskosität (centi Poise)

Hinsichtlich einerseits der Entsäuerung und andererseits der Desodorierung können sich die Reynolds-Zahlen des Flüssigkeitsfilms in den verschiedenen Zonen erheblich unterscheiden, so daß nachstehend zwischen diesen beiden Verfahrensführungen unterschieden wird.

Zur Entsäuerung werden gute Ergebnisse mit Reynolds-Zahlen von 200 bis 300, vorzugsweise von 200 bis 270 in der Anfangszone und von 250 bis 300, vorzugsweise von 260 bis 280 in der Schlußzone erzielt.

Zur Desodorierung werden gute Ergebnisse mit Reynolds-Zahlen von 200 bis 500, vorzugsweise von 200 bis 450 in der Anfangszone und von 400 bis 500, vorzugsweise von 420 bis 480 in der Schlußzone erzielt. Zur Beeinflussung der Reynolds-Zahl kann vor allem die Temperatur der Flüssigkeit — soweit das deren Stabilität zuläßt — variiert werden, weil dadurch die Flüssigkeitsviskosität verändert wird. Insbesondere bei Ölen mit einem geringen Gehalt an ungesättigten Triglyzeridkomponenten, wie etwa Palmöl, Erdnußöl, Kokosöl, Palmkernöl, können höhere Arbeitstemperaturen vorgesehen werden.

Die Haupt-Austreibsarbeit wird in der Anfangszone geleistet. Zur Bereitstellung der Verdampfungswärme der Verunreinigungen soll dort nach einem weiteren Gesichtspunkt der Erfindung eine Aufheizung der Flüssigkeit um etwa 5 bis 12 °K, vorzugsweise von 6 bis 10 °K erfolgen. Beispielsweise wird Palmöl mit einer Temperatur von 255 °C auf den Verteiler (der ersten Teilzone) der Anfangszone gegeben und weist im Sumpf (der gegebenenfalls zweiten Teilzone) der Anfangszone eine Temperatur von 263 °C auf. Zu diesem Zweck wird die Temperatur der Rieselkanalwände um wenigstens 4 °K über der Flüssigkeitstemperatur liegen. Vorzugsweise wird die Temperatur der indirekt beheizten Rieselkanalwände um 4 bis 12 °K und ganz besonders bevorzugt um 6 bis 8 °K oberhalb der Flüssigkeitstemperatur gehalten.

Da andererseits die Fertigölqualität sowohl von der mittleren Temperaturdifferenz zwischen Heizmedium und Flüssigkeitstemperatur in der Schlußzone sowie vor allem von der Flüssigkeitstemperatur im Sumpf der Schlußzone abhängt, soll dort ein Aufheizen des Ölfilms vermieden werden, da sonst Qualitätseinbußen, insbesondere bei sehr empfindlichen Triglyzeriden mit ungesättigten Fettsäuren Umesterungen zu befürchten sind. Deshalb wird in der Schlußzone die Temperatur der Rieselkanalwände im Bereich zwischen Flüssigkeitstemperatur und maximal 2 °K höher gehalten ; in der Praxis wurden gute Bedingungen dann erzielt, wenn die Temperatur der indirekt beheizten Rieselkanalwände um 0,5 bis 2.0 °K. vorzugsweise um weniger als 1 °K oberhalb der Flüssigkeitstemperatur gehalten wurde. Im obigem Beispiel fortfahrend, soll die Flüssigkeitstemperatur des Palmöls im Sumpf der Schlußzone 265 °C nicht überschreiten.

Nach einer besonders bevorzugten, kostengünstigeren Ausführungsform der Erfindung wird die Desodorierung und/oder Entsäuerung von hochsiedenden organischen Speiseölen, Fetten und Estern unter den nachstehend angegebenen Bedingungen durchgeführt.

I. In der unmittelbar an die Flüssigkeitsaufgabe anschließenden, wenigstens zwei theoretische Trennstufen gewährleistenden Anfangszone werden die nachstehenden Betriebsbedingungen vorgesehen :

k) die Dämpfe strömen durch Rieselkanäle mit einem hydraulischen Durchmesser von 73 bis 120 mm oder dessen Äquivalent bei nicht-rohrförmigen Rieselkanälen ;
l) die Schichtdicke des Flüssigkeitsfilms wird zur Desodorierung zwischen 0,25 und 0,55 mm und zur Entsäuerung zwischen 0,20 und 0,50 mm gehalten ;
m) die Reynolds-Zahl der herabfließenden Flüssigkeit wird zur Desodorierung zwischen 350 und 400 und zur Entsäuerung zwischen 200 und 280 gehalten ; und
n) die Temperatur der Rieselkanalwände wird um 4 bis 12 °K über der Flüssigkeitstemperatur gehalten.

II. Weiterhin werden in der dahinter arbeitenden, wenigstens sechs theoretische Trennstufen gewährleistenden Schlußzone die nachstehenden Betriebsbedingungen eingehalten :

w) die Dämpfe strömen durch Rieselkanäle mit einem hydraulischen Durchmesser von 25 bis 33 mm oder dessen Äquivalent bei nicht-rohrförmigen Rieselkanälen ;
x) die Schichtdicke der Flüssigkeit wird zur Desodorierung zwischen 0,35 und 0,7 mm und zur Entsäuerung zwischen 0,35 und 0,6 mm gehalten ;
y) die Reynolds-Zahl der herabfließenden Flüssigkeit wird zur Desodorierung zwischen 400 und 500 und zur Entsäuerung zwischen 250 und 300 gehalten ; und
z) die Temperatur der Rieselkanalwände wird im Bereich zwischen der Flüssigkeitstemperatur und max. 2 °K höher gehalten.

Nach einer weiteren, besonders bevorzugten Ausführungsform der Erfindung, die mit einem noch geringeren Druckverlust arbeitet und deshalb einen noch geringeren Treibdampfeinsatz pro Tonne Öldurchsatz erfordert, wird die Desodorierung und/oder Entsäuerung von hochsiedenden organischen Speiseölen, Fetten und Estern unter den nachstehend angegebenen Bedingungen durchgeführt.

III. In der unmittelbar an die Flüssigkeitsaufgabe anschließenden, wenigstens ca. eine theoretische Trennstufe gewährleistenden ersten Teilzone der Anfangszone werden die nachstehenden Betriebsbedingungen vorgesehen :

a) Die Dämpfe strömen durch Rieselkanäle mit einem hydraulischen Durchmesser von 120 bis 150 mm oder dessen Äquivalent bei nicht-rohrförmigen Rieselkanälen ;
b) die Schichtdicke des Flüssigkeitsfilms wird zur Desodorierung zwischen 0,3 bis 0,5 mm und zur Entsäuerung zwischen 0,2 bis 0,4 mm gehalten ;
c) die Reynolds-Zahl der herabfließenden Flüssigkeit wird zur Desodorierung zwischen 350 und 400 und zur Entsäuerung zwischen 200 bis 260 gehalten ; und
d) die Temperatur der Rieselkanalwände wird um 5 bis 10 °K über der Flüssigkeitstemperatur gehalten.

IV. In der sich an die erste Teilzone anschließenden, wenigstens eine theoretische Trennstufe gewährleistenden zweiten Teilzone der Anfangszone werden die nachstehenden Betriebsbedingungen vorgesehen :

k) die Dämpfe strömen durch Rieselkanäle mit einem hydraulischen Durchmesser von 73 bis 120 mm oder dessen Äquivalent bei nicht-rohrförmigen Rieselkanälen ;
l) die Schichtdicke des Flüssigkeitsfilms wird zur Desodorierung zwischen 0,35 und 0,55 mm und zur Entsäuerung zwischen 0,25 und 0,45 mm gehalten ;
m) die Reynolds-Zahl der herabfließenden Flüssigkeit wird zur Desodorierung zwischen 375 und 450 und zur Entsäuerung zwischen 220 und 280 gehalten ; und
n) die Temperatur der Rieselkanalwände wird um 2 bis 6 °K über der Flüssigkeitstemperatur gehalten.

V. Weiterhin werden in der dahinter arbeitenden, wenigstens sechs theoretische Trennstufen gewährleistenden Schlußzone die nachstehenden Betriebsbedingungen eingehalten :

5

w) Die Dämpfe strömen durch Rieselkanäle mit einem hydraulischen Durchmesser von 25 bis 33 mm oder dessen Äquivalent bei nicht-rohrförmigen Rieselkanälen ;

x) die Schichtdicke der Flüssigkeit wird zur Desodorierung zwischen 0,4 und 0,6 mm und zur Entsäuerung zwischen 0,3 und 0,5 mm gehalten ;

y) die Reynolds-Zahl der herabfließenden Flüssigkeit wird zur Desodorierung zwischen 400 und 500 und zur Entsäuerung zwischen 250 und 300 gehalten ; und

z) die Temperatur der Rieselkanalwände wird im Bereich zwischen der Flüssigkeitstemperatur und max. 2 °K höher gehalten.

Nach dem erfindungsgemäßen Verfahren, insbesondere unter den voranstehend genannten Bedingungen, kann bereits mit einem Treibdampfbedarf von weniger als 0,7 % des Rohöldurchsatzes eine Verringerung des Restsäuregehaltes und weiterer Verunreinigungen auf 0,02 Gew.-% oder weniger des Fertigöles erreicht werden. Bei der praktischen Erprobung der Erfindung konnte ein Treibdampfbedarf von etwa 3 bis 5 kg/Tonne Rohöl erreicht werden, was — im Sinne obiger Ausführungen — auch den Dampfbedarf für die Vakuumanlage und damit den Gesamt-Dampfbedarf des Verfahrens erheblich verringert. Sofern zur Vakuumerzeugung die Kühlwassertemperaturen im Eintritt zum Vakuumaggregat bei etwa 25 °C und beim Austritt aus demselben bei etwa 35 °C gehalten wurden, betrug der zur Ölaufwärmung, zur Fettsäureverdampfung, zur Erzeugung des Treibdampfes und zur Erzeugung des vom Vakuumaggregat benötigten Dampfes, sowie zur Deckung weiterer üblicher Wärmeverluste erforderliche anfallende Gesamtenergiebedarf insgesamt nur 44 000 kcal/Tonne Rohöl (184 000 KJ/t). Hiervon wurden lediglich ca. 18 000 kcal/Tonne (75 000 KJ/t) als Hochtemperaturwärme benötigt. Demgegenüber wurde nach dem aus der DE-A-2 914 101 bekannten Verfahren noch ein Gesamtenergiebedarf von etwa 57 000 kcal/Tonne bei einem Hochtemperaturwärmeanteil von etwa 25 000 kcal/Tonne benötigt.

Die Erfindung betrifft die Dosodorierung und/oder Entsäuerung von hochsiedenden organischen Verbindungen. « Hochsiedend » meint in diesem Zusammenhang, daß die zu behandelnden Flüssigkeiten bei einem Unterdruck von 12 mbar bereits oberhalb ihrer Zersetzungstemperatur von etwa 300 °C sieden würden. Die zu behandelnde Flüssigkeit wird in einem ersten vorgeschalteten Wärmetauscher — der vorzugsweise die Wärme des im Gegenstrom geführten, heißen Fertigöls ausnutzt — auf eine Temperatur von etwa 180 bis 245 °C erwärmt und daraufhin im Hochtemperatur-Wärmetauscher auf die Arbeitstemperatur von 220 bis 270 °C gebracht und mit dieser Temperatur in die Anfangszone eingeführt. Palmöl wird beispielsweise mit einer Temperatur von etwa 250 bis 260 °C in die Anfangszone eingeführt. Im genannten Temperaturbereich liegt die Flüssigkeitsviskosität der in der Anfangszone und der Schlußzone herabrieselnden Flüssigkeiten unter 0,08 Pa·s und vorzugsweise unter 0,06 Pa·s, woraus Fallgeschwindigkeiten der Ölfilme im Bereich zwischen 0,4 und 1,2 m/sec und vorzugsweise zwischen 0,6 und 0,9 m/sec resultieren. Zumeist wird die Fallgeschwindigkeit in der Anfangszone um etwa 10 % höher als in der Schlußzone gehalten.

Für eine praktisches Ausführungsbeispiel ergeben sich die nachstehend in tabellarischer Form angegebenen Verweilzeiten einzelner Flüssigkeitsteilchen für die Entsäuerung (Durchsatz 10 000 kg/h) bzw. die Desodorierung (Durchsatz 16 000 kg/h).

| Zone | Entsäuerung | Desodorierung |
|---|---|---|
| Anfangszone (4 m) | ca. 7,8 sec | ca. 5,7 sec |
| Schlußzone (8 m) | ca. 13,6 sec | ca. 9,4 sec |
| erste Teilzone (2 m) | ca. 3,9 sec | ca. 2,8 sec |
| zweite Teilzone (3 m) | ca. 5,4 sec | ca. 3,8 sec |
| Schlußzone (7 m) | ca. 11,9 sec | ca. 8,5 sec |

Häufig wird zusammen mit der Entsäuerung und/oder Desodorierung von Speiseölen auch eine Hitzebleichung durchgeführt, insbesondere um langkettige Farbstoffe wie etwa die Carotinoide zu zerstören. Hierzu kann nach dem Vorschlag der DE-A-2 914 101 eine Nachbehandlung des gereinigten Öles in einem Verweilzeitbehälter vorgesehen werden.

Nach einem weiteren Gesichtspunkt der vorliegenden Erfindung ist erkannt worden, daß die Geschmacksqualität des Fertigöles bei Durchführung einer solchen Hitzebleichung merklich verbessert werden kann, wenn der Verweilzeitbehälter mit Einrichtungen zur Treibdampfzugabe und zur indirekten Beheizung zum Ausgleich der Wärmeverluste ausgerüstet wird. Zur Erzielung eines langen Durchlaufweges für das Öl in möglichst guter Pfropfenströmung bei einer variablen Aufenthaltsdauer zwischen 5 und 65 min soll der Verweilzeitbehälter — entgegen dem bekannten Vorschlag — nicht als Schlußteil vorgesehen werden, sondern vor der Schlußzone zuschaltbar sein ; bei einer unterteilten Anfangszone könnte der Verweilzeitbehälter auch nach der ersten und vor der zweiten Teilzone zuschaltbar sein. Das Öl wird zumeist mit der Sumpftemperatur der vorausgegangenen Zone in den Verweilzeitbehälter eingebracht. Die hier vorgesehene Heizung dient lediglich dazu, auftretende Wärmeverluste auszugleichen, um die Öltemperatur aufrechtzuerhalten, damit das Öl mit dieser Temperatur in die sich anschliessende Zone eingebracht werden kann. Nachdem die Hauptmenge der Verunreinigungen bereits in der Anfangszone abgetrennt worden ist, setzen die thermischen Reaktionen während der Aufenthaltsdauer im Verweilzeitbehälter lediglich eine geringe Menge an leichterflüchtigen Spaltprodukten frei, zu deren Abtransport lediglich eine geringe Menge Treibdampf erforderlich ist. Erfindungsgemäß macht die Menge des in den Verweilzeitbehälter eingeführten Treibdampfes lediglich 0,02 bis 0,2 % des Rohöldurchsatzes, vorzugsweise etwa 0,1 % des Rohöldurchsatzes aus.

Die genannten Bedingungen erlauben es weiterhin, im Verweilzeitbehälter lediglich ein Vakuum zwischen etwa 60 und 280 mbar vorzugsweise zwischen 130 und 200 mbar vorzusehen. Unter diesen Bedingungen kann der aus dem Verweilzeitbehälter abgezogene verunreinigte Treibdampf mittels üblichen Kühlwassers im Kondensationsbereich von 38 bis 65 °C, vorzugsweise zwischen etwa 50 und 60 °C niedergeschlagen werden. Hierdurch konnte der Dampfbedarf des Vakuum erzeugenden Aggregates um etwa 5 bis 15 kg/Tonne Rohöldurchsatz verringert werden.

Es sei jedoch ausdrücklich darauf hingewiesen, daß es nicht in jedem Fall zweckmäßig ist, das Öl auch durch den Verweilzeitbehälter zu führen. Gerade wenn der Endsäuregehalt des Fertigproduktes deutlich unterhalb 0,02 Gew.-% des Fertigöles liegen soll, und weiterhin ein wegen seines relativ hohen Gehaltes an mehrfach ungesättigten Fettsäuren innerhalb der Glyzeride thermisch besonders empfindliches Öl vorliegt, dann erweist es sich als zweckmäßig, das aus dem Sumpf der Anfangszone austretende Öl am Verweilzeitbehälter vorbei unmittelbar auf den Verteiler im Kopf der Schlußzone zu geben. Unter diesen Bedingungen kann die Verweildauer einzelner Ölteilchen im Hochtemperaturteil der Anlage unterhalb 30 sec gehalten werden, so daß thermische Schädigungen wegen der kurzen und schonenden Arbeitsbedingungen einschließlich thermisch bedingter Umesterungen weitestgehend ausgeschlossen sind.

Wie bereits ausgeführt, betrifft die Erfindung die Desodorierung und/oder Entsäuerung von hochsiedenden organischen Speiseölen, Fetten und Estern. Zu geeigneten Speiseölen gehören beispielsweise Palmöl, Sojaöl, Baumwollsaatöl, Kokosöl, Palmkernöl, Rapsöl, Weizenkeimöl, Olivenöl, hydriertes Fischöl und dgl. Zu geeigneten Fetten gehören beispielsweise Rindertalg, Schweineschmalz, « Muttontallow » (= Schafstalg) und dgl. Zu geeigneten Estern gehören beispielsweise Mono-, Di- und Triglyzeride höherer Fettsäuren, die als Weichmacher in Betracht kommenden Ester von Phthalsäure, Sebacinsäure und dgl. ; die Ester höherer Alkohole mit Fettsäuren, wie etwa Butylstearat und ähnliche Ester.

Daneben könnte die Erfindung auch auf die schonende, destillative Reinigung anderer thermisch empfindlicher Gemische angewendet werden, deren abzutrennende Komponenten einen um mehrere Zehner-Potenzen höheren Dampfdruck aufweisen als die höher siedende thermisch empfindliche Substanz.

Die vornehmlich zur Verarbeitung auf Speiseöle herangezogenen Rohöle wie insbesondere Palmöl und Sojaöl weisen je nach Ursprungsland einen größeren oder kleineren Gehalt an freien Fettsäuren im Bereich von etwa 1 bis 10 % auf. Daneben enthalten solche Rohöle etwa 0,05 bis 0,3 Gew.-% Wasser und 0,01 bis 0,1 Gew.-% andere leicht siedende, destillativ abtrennbare Komponenten. Bevor derartige Rohöle auf die Behandlungstemperatur aufgeheizt und dem erfindungsgemäßen Verfahren zugeführt werden, erfolgt vorzugsweise eine Entschleimung und in einer vorgeschalteten Behandlungsstufe eine Entgasung.

Nach einem weiteren Gesichtspunkt der Erfindung erfolgt die Entgasung bei relativ niedrigen Temperaturen zwischen 40 und 100 °C, vorzugsweise zwischen 60 und 80 °C, sowie unter einem Arbeitsdruck von etwa 100 bis 280 mbar, vorzugsweise zwischen 120 und 200 mbar. Unter diesen Bedingungen wird das Rohöl ausreichend entgast, jedoch nicht restlos getrocknet. Vielmehr verbleibt im Rohöl ein Restanteil an gelöstem Wasser in der Größenordnung von 0,05 bis 0,2 Gew.-%, der erst unter den Arbeitsbedingungen in der anschließenden Anfangszone der Gegenstrom-Fallfilm-Trägerdampfdestillations-Zonen (Arbeitsdruck 2,5 bis 15 mbar, vorzugsweise 5 bis 8 mbar, Temperatur des Flüssigkeitsfilmes 230 bis 275 °C, vorzugsweise 250 bis 275 °C) freigesetzt wird. Der unter diesen Bedingungen aus dem Flüssigkeitsfilm freigesetzte Wasserdampf wirkt zusätzlich als Trägerdampf, fördert die Oberflächenerneuerung des Flüssigkeitsfilms in der Anfangszone und erhöht dort auch die Reynolds-Zahl der Flüssigkeit. Sofern daher das Rohöl entgast, jedoch mit einem Wassergehalt von etwa 0,05 bis 0,2 Gew.-% in die Anfangszone eingeführt wird, verbessert dies dort den Stoffaustausch gegenüber einem herabfließenden Film aus wasserfreier Flüssigkeit merklich. Die in der Entgasungsstufe freigesetzten Dämpfe werden vorzugsweise ebenfalls am ersten Teil des Vakuumaggregates mit den entsprechenden Kompressionsstufen vorbei einem Einspritz-Kondensator entsprechenden Druckes zugeführt und dort mittels üblichem Kühlwasser niedergeschlagen, um eine zusätzliche Belastung des Kompressionsanteiles zu vermeiden.

Unter bestimmten Voraussetzungen, etwa bei der Aufarbeitung schlecht gelagerter Rohöle oder bei der Aufarbeitung von sogenannten « Acidölen » kann deren Gehalt an freien Fettsäuren und anderen Leichtsiedern so hohe Werte annehmen, beispielsweise bis etwa 10 Gew.-% und mehr, daß die Gemische bei den vorgesehenen Arbeitbedingungen — Temperatur bis 280 °C, Arbeitsdruck unter 10 mbar — bereits ohne Zugabe von Träger- bzw. Strippdampf sieden.

Nach einem weiteren Gesichtspunkt der Erfindung wird von dieser Beobachtung Gebrauch gemacht und vor der Einführung des Rohöles in die Anfangszone eine Flashbehandlung durchgeführt. Hierzu kann ein Flashbehälter vorgesehen werden, in den das auf Arbeitstemperatur gebrachte Rohöl eingeführt wird. Im Flashbehälter herrscht praktisch der gleiche Arbeitsdruck wie in der Anfangszone (unter 10 mbar), wozu der Flashbehälter zweckmäßigerweise über Kopf an den, das Vakuum erzeugende Aggregat vorgeschalteten Einspritzkondensator angeschlossen ist. Vorteilhafterweise ist der Flashbehälter oberhalb des Verteilers im Kopf der Anfangszone angeordnet, so daß das geflashte Rohöl — ohne Benutzung einer Pumpe — lediglich unter der Wirkung seines Gewichtes aus dem Sumpf des Flashbehälters auf diesen Verteiler gelangt. Allein mittels einer solchen — ohne die Zuführung von Strippdampf erfolgenden — Flashung kann unter erfindungsgemäß typischen Entsäuerungsbedingungen — Temperatur etwa 260 °C, Arbeitsdruck etwa 2,5 bis 6,8 mbar — der Anteil an freien Fettsäuren und anderen Leichtsiedern im Rohöl auf etwa 2 bis 4 Gew.-% abgesenkt werden. Ersichtlich führt eine solche Flashung zur Verringerung des Stripp- bzw. Trägerdampfbedarfs und damit auch zu einer Energieeinsparung im Vakuum erzeugenden Aggregat.

Eine solche Flashung kann zusätzlich zur vorausgegangenen Entschleimung, Entgasung und teilweisen Entwässerung vorgesehen werden.

Die Qualität des Fertigöles kann durch eine an sich bekannte Zugabe von Komplexbildnern in den Sumpf der Schlußzone oder in das abgezogene und bereits weiter abgekühlte Fertigöl weiter verbessert werden. Derartige Komplexbildner dienen vor allem dazu, in geringer Menge stets vorhandene und oxidationsfördernd wirkende Metallionen zu komplexieren. Zu diesem Zweck hat sich beispielsweise die Zugabe von Zitronensäure in einer Menge von 5 g/Tonne Fertigöl in den Sumpf der Schlußzone gut bewährt. Zu anderen geeigneten Komplexbildnern gehören Weinsäure, Phosphorsäure, Ascorbinsäure, Milchsäure und dgl. Soweit derartige Komplexbildner bei der Sumpftemperatur bereits geschädigt werden, erfolgt deren Zugabe zweckmäßigerweise nach Kühlung des Fertigöles auf ca. 120 bis 160 °C im Bereich der Blankfiltration.

Nach einem wesentlichen Gesichtspunkt erfolgt die Treibdampfzugabe lediglich im Sumpf der Schlußzone. Damit herrschen dort zum Austreiben des noch vorhandenen restlichen Gehaltes an freien Fettsäuren optimale Bedingungen. Ferner können dadurch im Sumpf dieser Schlußzone die zum Stoffaustausch erforderlichen Temperaturen auf dem niedrigst-möglichen Wert gehalten werden. Schließlich gewährleistet diese Maßnahme über sämtliche Zonen ein echtes Gegenstromprinzip mit höchstmöglicher Anreicherung der Fettsäuren in Dampf, so daß der am Kolonnenkopf austretende Dampf bezogen auf wasserfreie Substanzen zu mehr als 95 % aus freien Fettsäuren und zu weniger als 3 % aus den Triglyzeriden der behandelten Öle besteht.

Nachstehend wird die Anlage zur Durchführung des erfindungsgemäßen Verfahrens anhand bevorzugter Ausführungsformen mit Bezugnahme auf die Zeichnungen erläutert ; die letzteren zeigen :

Figur 1 ein Fließschema mit zwei Gegenstrom-Fallfilm-Treibdampfdestillations-Zonen zur Durchführung des erfindungsgemäßen Verfahrens ;

Figur 1a ein Fließschema analog zu Fig. 1, wobei jedoch abweichend und zusätzlich eine Flashzone vorgesehen ist ;

Figur 2 ein Fließschema mit drei Gegenstrom-Fallfilm-Treibdampfdestillations-Zonen zur Durchführung des erfindungsgemäßen Verfahrens ;

Figur 3 eine mit Kerzen ausgerüstete Fallfilmkolonne, innerhalb der die Anfangszone des erfindungsgemäßen Verfahrens durchgeführt werden kann ;

Figur 4 die Fallfilmkolonne nach Fig. 3 in einer Querschnittsdarstellung ;

Figur 5 eine echte Rieselkolonne geringen Druckverlustes, innerhalb der die Schlußzone des erfindungsgemäßen Verfahrens durchgeführt werden kann ;

Figur 6 eine senkrecht stehende Gegenstrom-Boden-Kolonne, die als Verweilzeitbehälter dienen kann ; und

Figur 7 schematisch einen Kolonnenschuß, in den drei verschiedene Fallfilmkolonnen zur Realisierung der ersten Teilzone, der zweiten Teilzone und der Schlußzone integriert sind.

Wie aus Fig. 1 ersichtlich, besteht die Gesamtanlage zur Desodorierung und/oder Entsäuerung in den Hauptteilen — neben den hier nicht im einzelnen erwähnten, üblichen Bestandteilen solcher Anlagen wie Rohrleitungen, Pumpen, Armaturen, Reglern und dgl. — hauptsächlich aus der Entgasungsstufe 4, den Wärmetauschern 27 und 28, einer ersten Fallfilmkolonne 10, dem Einspritzkondensator 12 mit Kühler 14 in der Zirkulationsleitung, dem Vakuum erzeugenden Aggregat 16, 16a, dem parallel zur Leitung 17 geschalteten Verweilzeitbehälter 19, der letzten Fallfilmkolonne 22, der Trägerdampfzuführung 24 und der Abzugsleitung 25 für das Fertigprodukt.

Im einzelnen wird — wie aus Fig. 1 ersichtlich — das Rohöl aus einem Lagertank 1 mittels der Pumpe 2 über die Leitung 3 dem Kopf der Entgasungsstufe 4 zugeführt. Die Entgasungsstufe 4 wird beispielsweise bei einem Arbeitsdruck von 200 mbar betrieben. Mittels des Flüssigkeitsstandreglers im Sumpf der Entgasungsstufe 4 wird gewährleistet, daß auf der Saugseite der über die Leitung 5 nachgeschalteten Förderpumpe 6 stets eine entsprechend hohe Flüssigkeitsäule steht, mit der in der Pumpe 6 stets ein geringer Überdruck gewährleistet werden kann. Damit kann — auch bei Verwendung der kostengünstigeren mit Stopfbüchsen ausgestatteten Pumpen für die Förderpumpe 6 — verhindert werden, daß erneut Luftsauerstoff in das bereits entgaste Öl eintritt.

Von der Förderpumpe 6 wird das Öl über die Leitung 7 einem Wärmetauscher 27 zugeführt. Im Wärmetauscher 27 erfolgt die Aufheizung des entgasten, aber noch wasserhaltigen Öles im Wärmetausch mit dem aus dem Sumpf der letzten Fallfilmkolonne 22 abgezogenen Fertigöles. Das im Wärmetauscher 27 vorgewärmte Rohöl wird über die Leitung 8 dem Hochtemperatur-Wärmetauscher 9 zugeführt, wo im Austausch gegen ein Hochtemperatur-Heizmedium die Aufheizung auf die Arbeitstemperatur erfolgt.

Wie aus Fig. 1a ersichtlich, kann zwischen Hochtemperaturwärmetauscher 9 und Fallfilmkolonne 10 ein Flashbehälter 46 eingeschaltet sein, der über Kopf über die Leitung 47 an den Sumpf des Einspritzkondensators 12 angeschlossen ist. Bei Bedarf kann — ohne daß dies in der Zeichnung angedeutet ist — der Flashbehälter 46 mit dem, dem Hochtemperatur-Wärmetauscher 9 zugeführten Heimittel beheizt werden. Aus dem Sumpf des Flashbehälters 46 gelangt das geflashte Rohöl auf den Verteiler im Kopf der Fallfilmkolonne 10.

Das im Hochtemperatur-Wärmetauscher 9 auf die Arbeitstemperatur gebrachte Rohöl wird daraufhin unmittelbar — oder über die zusätzlich vorgesehene Flashzone 46 — auf den im Kopf der ersten Fallfilmkolonne 10 angeordneten Verteiler gegeben. Bei diesem, sowie den weiteren Verteilern sind — nicht dargestellte — Dampfdurchtrittsröhrchen zweckmäßiger Abmessungen vorgesehen, um die Dämpfe möglichst Druckverlust-arm (beispielsweise weniger als 0,008 mbar) von Zone zu Zone zu leiten. Innerhalb dieser Fallfilmkolonne 10 wird die Anfangszone der Gegenstrom-Fallfilm-Trägerdampfdestillations-Zonen realisiert. Nach einem wesentlichen Gesichtspunkt der vorliegenden Erfindung sind in dieser Fallfilmkolonne 10 Rieselkanäle mit einem hydraulischen Durchmesser von 73 bis 120 mm oder dessen Äquivalent bei nicht-rohrförmigen Rieselkanälen und mit einer Länge von 2 bis 6 m ausgebildet. Vorzugsweise weisen diese Rieselkanäle einen hydraulischen Durchmesser von etwa 84 bis 108 mm bei einer Rieselkanallänge von etwa 3 bis 5 m auf. Gut geeignet sind beispielsweise indirekt beheizte Rohrbündelkolonnen, bei denen der Flüssigkeitsfilm an der Innenwand der Rohre herabrieselt. Bei der anhand der Fig. 1 beschriebenen Ausführungsform befindet sich innerhalb der Fallfilmkolonne 10 ein Rohrbündel mit 60 Rohren (Innendurchmesser 84 mm, Länge 4 m), an deren Innenwänden der Flüssigkeitsfilm herabfließt. In diesem Falle entspricht der Innendurchmesser direkt dem hydraulischen Durchmesser des Rieselkanals. Bekanntlich ist der « hydraulische Radius » $r_h$ eines Rieselkanals nach Prandtl definiert als

$$r_h = \frac{F}{U} ;$$

wobei F für die Querschnittsfläche und U für den benetzten Querschnittsumfang stehen (vgl. « Führer durch die Strömungslehre » von Ludwig Prandtl, erschienen im Verlag Friedrich Vieweg & Sohn, Braunschweig, 1942, S. 145).

Für nicht-rohrförmige Rieselkanäle läßt sich das Äquivalent des hydraulischen Rieselkanaldurchmessers nach bekannten Gleichungen ableiten, wie sie beispielsweise von Bruno Eck in « Technische Strömungslehre », erschienen im Springer Verlag, Berlin, 1949, S. 109, angegeben sind. Danach kann der hydraulische Durchmesser eines Strömungs- oder Rieselkanals unrunden Querschnitts aus dem Querschnittsflächen-Äquivalent im Sinne von

$$d = \frac{4 \cdot F}{U}$$

ermittelt werden. Hierbei bedeuten

d = hydraulischer Durchmesser des unrunden Rieselkanals ;
F = Querschnittsfläche des unrunden Rieselkanals ;
U = Umfang des unrunden Rieselkanals.

Innerhalb der Fallfilmkolonne 10 wird jedes einzelne Rohr des Rohrbündels von Heizmedium umspült, das aus vorgegebener Quelle über den Stutzen 36 zu- und über den Stutzen 35 abgeführt wird. Im vorgesehenen Temperaturbereich kann Hochdruckdampf oder ein Hochdrucktemperaturöl wie beispielsweise « HT-Öl » (höhere aromatische Verbindungen) als Heizmedium dienen, wobei die Anwendung des Hochtemperaturöls ein Temperaturgefälle auf der Heizmittelseite erzeugt und deshalb bevorzugt wird.

Das sich im Kopf der Fallfilmkolonne 10 ansammelnde Gemisch aus verunreinigtem Trägerdampf, aus dem Rohöl abgetrennten freien Fettsäuren und aus anderen Leichtsiedern wird über die Leitung 11 abgezogen und in den Einspritzkondensator 12 eingeführt. Die Pumpe 13 saugt das sich im Sumpf des Einspritzkondensators 12 ansammelnde Kondensat ab und drückt es in eine Zirkulationsleitung, die über den Kühler 14 geführt wird. Danach wird das anfallende Kondensat kontinuierlich über die Leitung 15 abgezogen, während das Kühlmittel erneut in den oberen Teil des Einspritzkondensators 12 eingespritzt

9

wird. Vom Kopf des Einspritzkondensators 12 führt schließlich eine ausreichend bemessene Leitung zur Gewährleistung eines äußerst geringen Strömungsverlustes zu der ersten Boosterstufe der Vakuumanlage 16, 16a.

Das an der Innenwand der Rohrbündel in der Fallfilmkolonne 10 herabfließende Öl sammelt sich in deren Sumpf und wird über die Leitung 17 abgezogen. Innerhalb der Leitung 17 befindet sich ein Sperrventil $V_1$, das dann geschlossen wird, wenn das bereits teilweise gereinigte Öl zusätzlich über den Verweilzeitbehälter 19 geführt werden soll.

Die Zuleitung zum Verweilzeitbehälter 19 kann über das Regelventil $V_2$ abgesperrt und die Entnahmeleitung 20 aus dem Verweilzeitbehälter 19 kann mittels des Regelventils $V_3$ gesperrt werden. In den Verweilzeitbehälter 19 kann über die Zuleitung 18 Trägerdampf eingeführt werden. Der verunreinigte und mit Spaltprodukten beladene Trägerdampf wird über die Leitung 21 aus dem Verweilzeitbehälter 19 abgeführt und nach Passieren des Steuerventils $V_4$ einem üblichen Kondensator 31 zugeführt. Sofern der Verweilzeitbehälter 19 unter einem Arbeitsdruck von etwa 60 bis 260 mbar betrieben und lediglich 0,02 bis 0,2, vorzugsweise 0,1 Gew.-% Trägerdampf des Rohöldurchsatzes in den Verweilzeitbehälter 19 eingeführt werden, können die aus dem Verweilzeitbehälter 19 abgezogenen Dämpfe im Kondensator 31 mit üblichem Kühlwasser niedergeschlagen werden und belasten deshalb das Vakuumsystem nicht.

Das aus dem Sumpf der Fallfilmkolonne 10 abgezogene, bereits weitgehend gereinigte Rohöl gelangt entweder unmittelbar über die Leitung 17 oder nach Passieren des Verweilzeitbehälters 19 in den Kopf der letzten Fallfilmkolonne 22 und wird über deren Verteiler auf die verschiedenen Rieselkanäle verteilt. Innerhalb der Fallfilmkolonne 22 ist die Schlußzone der Gegenstrom-Fallfilm-Treibdampfdestillations-Zonen realisiert. Aus dem Kopf der Fallfilmkolonne 22 führt eine Sammelleitung 23 in den Sumpf der Fallfilmkolonne 10, so daß zwischen beiden Fallfilmkolonnen 10 und 22 einerseits Flüssigkeitsleitung und andererseits Dampfleitung besteht. Nach einem wesentlichen Gesichtspunkt der Erfindung sind innerhalb dieser Fallfilmkolonne 22 Rieselkanäle mit einem hydraulischen Durchmesser von 25 bis 33 mm oder dessen Äquivalent bei nichtrohrförmigen Rieselkanälen und mit einer Länge von 6 bis 10 m ausgebildet. Vorzugsweise weisen diese Rieselkanäle einen hydraulischen Durchmesser von 28 bis 32 mm bei einer Rieselkanallänge um 8 m herum auf.

Bei der anhand der Fig. 1 beschriebenen Ausführungsform weist die Fallfilmkolonne 22 ein Rohrbündel mit 150 Rohren von 33 mm Innendurchmesser und 8 m Länge auf. Diese Rohre werden von einem Heizmedium umspült, das über den Stutzen 38 zu- und über den Stutzen 37 abgeführt wird. Das Rohöl fließt an der Innenwand der Rohre herunter, wobei gleichzeitig die Abtrennung der restlichen leichtsiedenden Begleitstoffe erfolgt und gelangt schließlich in den Sumpf der Fallfilmkolonne 22. In diesen wird über die Leitung 24 der Treibdampf zugeführt, vorzugsweise sog. Edeldampf, der durch Verdampfung von vorher destilliertem und entgastem Wasser erzeugt worden ist.

In den Sumpf der Fallfilmkolonne 22 kann über die mit der Dosierpumpe 29 ausgestattete Leitung 30 aus einem Vorrat ein Komplexbildner wie beispielsweise Zitronensäure eingeführt werden, um die Stabilität des Fertigöls zu steigern. Das Fertigöl wird schließlich über die Leitung 25 aus dem Sumpf der Fallfilmkolonne 22 abgezogen und mittels der Pumpe 26 durch den Wärmetauscher 27 gedrückt, wo es den wesentlichen Teil seiner fühlbaren Wärme an das zu behandelnde Rohöl abgibt. Um eine gute Lagerstabilität des Fertigöls zu gewährleisten, erfolgt schließlich eine weitere indirekte Abkühlung mittels Kühlwasser im Tauscher 28 bis auf die niedrigst mögliche Temperatur, bei der sich das entsprechende Fertigöl gerade noch pumpen läßt. Gegebenenfalls kann anschließend eine Blankfiltration unter Inertgasatmosphäre vorgesehen werden.

Wie dem Schema nach Fig. 1 entnehmbar ist, werden sowohl die Entgasungsstufe 4 wie der Verweilzeitbehälter 19 vorzugsweise unter solchen Bedingungen betrieben, daß sich die daraus abgezogenen Dämpfe jeweils im Kondensator 31 mittels üblichem Kühlwasser einer Temperatur unter 60 °C niederschlagen und hinsichtlich der kondensierbaren Phasen kondensieren lassen. Die Entnahme des dabei gebildeten Kondensates nach Scheidung im Phasenscheider 32 erfolgt zum einen als wässrige Phase über die Leitung 33, die zusammen mit dem Kondensat der Vakuumanlage zur Erfüllung der heutigen Umweltauflagen in an sich bekannter Weise aufgearbeitet wird. Die sich im Scheider 32 als obere Phase absetzende, leichtere organische Phase, wird über die Leitung 34 abgezogen, was wegen des geringen Mengenanfalls am besten nicht kontinuierlich, sondern periodisch vorgenommen wird.

In einer Anlage der geschilderten Art kann sowohl die Entsäuerung von Rohöl wie die Desodorierung von vorentsäuertem Rohöl durchgeführt werden. Zweckmäßigerweise unterscheiden sich die jeweiligen Betriebsbedingungen. Ausgehend von einem üblichen Gehalt an freien Säuren von etwa 5 Gew.-% erfolgt die Entsäuerung bis auf einen Endgehalt an freien Säuren von weniger als 0,03 % unter den nachstehend angegebenen Bedingungen :

Kopfdruck der Anfangszone : zwischen 2,5 und 10 mbar, vorzugsweise zwischen 5 und 8 mbar ;
Sumpfdruck der Schlußzone : maximal 2 mbar höher, vorzugsweise weniger als 1,4 mbar höher als der Kopfdruck der Anfangszone ;
Eintrittstemperatur des Rohöls : 250 bis 275 °C, vorzugsweise 255 bis 265 °C ;
Austrittstemperatur des Fertigöls : 255 bis 280 °C, vorzugsweise 260 bis 275 °C ;
Reynolds-Zahl des Flüssigkeitsfilms : in der Anfangszone über 200, in der Schlußzone über 250.

Unter diesen Bedingungen erfolgt gemeinsam mit der Entsäuerung auch die Desodorierung des Rohöls.

In einigen Fällen kann als Ausgangsmaterial bereits chemisch entsäuertes « Rohöl » zur Verfügung stehen, das dann gemäß dem erfindungsgemäßen Verfahren lediglich desodoriert werden muß. Ein solches Ausgangsmaterial weist zumeist einen Gehalt an freien Säuren unter 0,3 Gew.-% auf. In diesem Fall erfolgt die Desodorierung unter den nachstehenden Bedingungen :

Kopfdruck der Anfangszone : zwischen 2,5 und 10 mbar, vorzugsweise zwischen 5 und 8 mbar ;
Sumpfdruck der Schlußzone : maximal 2 mbar höher, vorzugsweise weniger als 1,4 mbar höher als der Kopfdruck in der Anfangszone ;
Eintrittstemperatur des Rohöls : 250 bis 275 °C, vorzugsweise 255 bis 265 °C ;
Austrittstemperatur des Fertigöls : 255 bis 280 °C, vorzugsweise 260 bis 275 °C ;
Reynolds-Zahl des Flüssigkeitsfilms : in der Anfangszone über 350, in der Schlußzone 400 bis 500.

Der Rohöldurchsatz beträgt etwa das 1,4- bis 1,8-fache, vorzugsweise etwa das 1,6-fache des Öldurchsatzes bei der Entsäuerung.

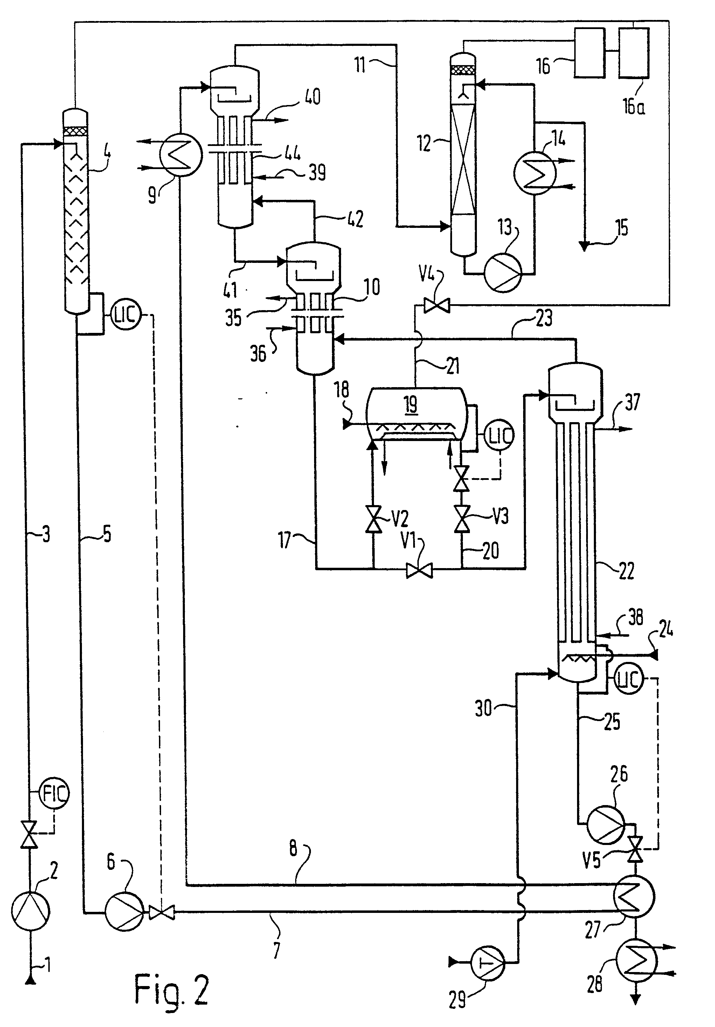

Nach weiteren Ausführungsformen der Erfindung kann die oben anhand der Fig. 1 erläuterte Anlage in verschiedenen Teilbereichen abgewandelt werden. So ist es möglich — wie anhand der Schemazeichnung nach Fig. 2 dargestellt — das im Wärmetauscher 9 auf die Arbeitstemperatur gebrachte Rohöl nicht auf den Verteiler der Fallfilmkolonne 10 aufzugeben, sondern dieser eine weitere Fallfilmkolonne 44 vorzuschalten, und das Rohöl auf den Verteiler im Kopf der Fallfilmkolonne 44 aufzugeben. In diesem Falle ist die Anfangszone der Gegenstrom-Fallfilm-Treibdampfdestillations-Zonen zweizonig ausgebildet und innerhalb der beiden Fallfilmkolonnen 44 und 10 realisiert.

Wie in Fig. 2 dargestellt, führt in diesem Falle die Dampfsammelleitung 11 vom Kopf der Fallfilmkolonne 44 zum Einspritzkondensator 12.

Die Fallfilmkolonne 44 gewährleistet etwa 1 theoretische Trennstufe. Innerhalb der Fallfilmkolonne 44 sind Rieselkanäle mit einem hydraulischen Durchmesser von 120 bis 150 mm und einer Länge von 2 bis 3 m ausgebildet. Vorzugsweise weisen die Rieselkanäle der Fallfilmkolonne 44 hydraulische Durchmesser — oder deren Äquivalent bei nichtrohrförmigen Rieselkanälen von 125 bis 140 mm bei einer Länge von ca. 2 m auf. Diese Rieselkanäle können beispielsweise innerhalb der Rohre einer Rohrbündelkolonne ausgebildet sein. Die Rieselkanäle werden indirekt mittels eines Heizmediums beheizt, das über den Stutzen 39 zu- und über den Stutzen 40 abgeführt wird. Das Rohöl gelangt in den Sumpf der Fallfilmkolonne 44 und wird von dort über die Leitung 41 abgezogen und auf den Verteiler im Kopf der Fallfilmkolonne 10 gegeben. Vom Kopf der Fallfilmkolonne 10 führt eine Dampfsammelleitung 42 zum Sumpf der Fallfilmkolonne 44, so daß zwischen den hintereinander arbeitenden Fallfilmkolonnen 44 und 10 ebenfalls Dampf- und Flüssigkeitsleitung besteht.

Darüberhinaus stimmt das Schema nach Fig. 2 mit dem Schema nach Fig. 1 überein, wobei sich gleiche Bezugszeichen auf gleiche Bauteile beziehen, so daß hinsichtlich der weiteren Erläuterung auf Fig. 1 verwiesen sei.

Die mit Bezugnahme auf die Fig. 1 und 2 erläuterten Fallfilmkolonnen 10, 22 und 44 müssen nicht notwendigerweise als Rohrbündelkolonnen ausgestaltet sein.

Eine alternative Ausbildung dieser Fallfilmkolonnen zeigt Fig. 3, sowie die entsprechende Querschnittsdarstellung nach Fig. 4. Bei der hier dargestellten Fallfilmkolonne 50 rieselt der Flüssigkeitsfilm an der Außenseite von Kerzen 51 herab, durch deren Innenraum das Heizmedium geführt wird. Das letztere wird über den Stutzen 52 zugeführt und über Rohre 53, die sich mit ihrem offenen Ende bis nahe in die Kuppel der Kerzen 51 erstrecken, gesammelt und über den Ablaufstutzen 54 abgeführt. Die zu behandelnde Flüssigkeit wird über den Zulauf 55 auf den Verteiler 56 gegeben und gelangt von dort über Zulaufkanäle 57 auf die Kuppel der Kerzen 51, um an deren Außenwand in dünner Schicht herabzufließen. Der Zwischenraum zwischen benachbarten Kerzen definiert den Rieselkanal 58, dessen Äquivalent des hydraulischen Durchmessers beispielsweise 73 bis 150 mm betragen muß, sofern innerhalb der Kolonne 50 die Anfangszone der Gegenstrom-Fallfilm-Treibdampfdestillations-Zonen verwirklicht wird. Die behandelte Flüssigkeit sammelt sich im Sumpf der Kolonne 50 und wird dort über die Leitung 59 abgezogen. Die in einer weiter stromabwärts gelegenen Fallfilmkolonne angefallenen Dämpfe werden über die Zuleitung 60 in den Sumpf der Kolonne 50 eingeführt und entweichen aus dieser, gemeinsam mit den aus der behandelten Flüssigkeit entfernten Verunreinigungen über die Abzugsleitung 61.

Die beschriebene Kolonne 50 eignet sich insbesondere für die Ölentsäuerung, wenn mit der Freisetzung relativ grosser Dampfmengen aus dem herabrieselnden Flüssigkeitsfilm gerechnet werden muß, beispielsweise, wenn der Gehalt an freien Fettsäuren mehr als 5 Gew.-% beträgt.

Mit Fig. 5 ist eine echte Rieselkolonne 70 dargestellt, in der insbesondere die Schlußzone der Gegenstrom-Fallfilm-Treibdampfdestillations-Zonen realisiert werden kann, weil hier nur ein sehr niedriger Wärmebedarf infolge des nur sehr geringen Verdampfungsanteils von zum Beispiel 5 kg/Tonne im Falle der Entsäuerung und von nur 1 kg/Tonne Rohöldurchsatz im Falle der Desodorierung erforderlich ist. Derartige, gut isolierte, hochwirksame, echte Rieselsäulen sind bekannt und werden beispielsweise von der Fa. Gebrüder Sulzer AG, Winterthur, Schweiz, vertrieben. Dank spezieller Packungen innerhalb dieser echten Rieselsäulen gewährleisten diese über eine Länge von 6 bis 8 m hinweg 6 bis 8 theoretische Trennstufen und weisen hierzu lediglich einen Druckverlust von etwa 0,1 bis 0,5 mbar pro theoretische Trennstufe auf. Die Packungskörper bestehen aus schräg gefalteten Lamellen, die so aufeinandergeschichtet sind, daß offene, sich kreuzende Kanäle gebildet werden, die schräg zur Kolonnenachse verlaufen. Damit werden die Dämpfe beim Durchströmen der Packung in Richtung der parallelen Lage vermischt. Durch Verdrehen aufeinanderfolgender Packungen erfolgt eine radiale Vermischung über den gesamten Kolonnenquerschnitt. An den Kreuzungsstellen der Rieselkanäle erfolgt eine ständige Erneuerung der Flüssigkeitsfilmoberfläche. Wegen des außerordentlich geringen Druckverlustes in derartigen echten Rieselkolonnen können nach einem weiteren Gesichtspunkt der Erfindung bei Realisierung der Schlußzone in einer solchen Rieselkolonne dort die Dämpfe auch durch Rieselkanäle mit einem kleineren hydraulischen Durchmesser als 25 mm — oder dessen Äquivalent bei nicht-rohrförmigen Rieselkanälen — geleitet werden. Beispielsweise kann die Schlußzone in derartigen echten Rieselkolonnen realisiert werden, deren Packungen Rieselkanaldurchmesser bis herab zu 8 mm aufweisen.

Das in der stromaufwärts gelegenen Anfangszone bereits behandelte Rohöl wird über den Zulauf 71 zugeführt und gelangt in den Verteiler 72 der Rieselkolonne 70. Aus dem Verteiler 72 gelangt die Flüssigkeit auf Packungen der oben beschriebenen Art. Im Sumpf der Rieselsäule 70 wird über den Einlaß 73 Trägerdampf zugeführt und gemeinsam mit den freigesetzten Verunreinigungen am Kopf der Rieselsäule 70 über die Abzugsleitung 74 abgeführt. Das sich im Sumpf ansammelnde Fertigöl wird über die mit dem Regelventil $V_5$ ausgestattete Leitung 75 abgezogen.

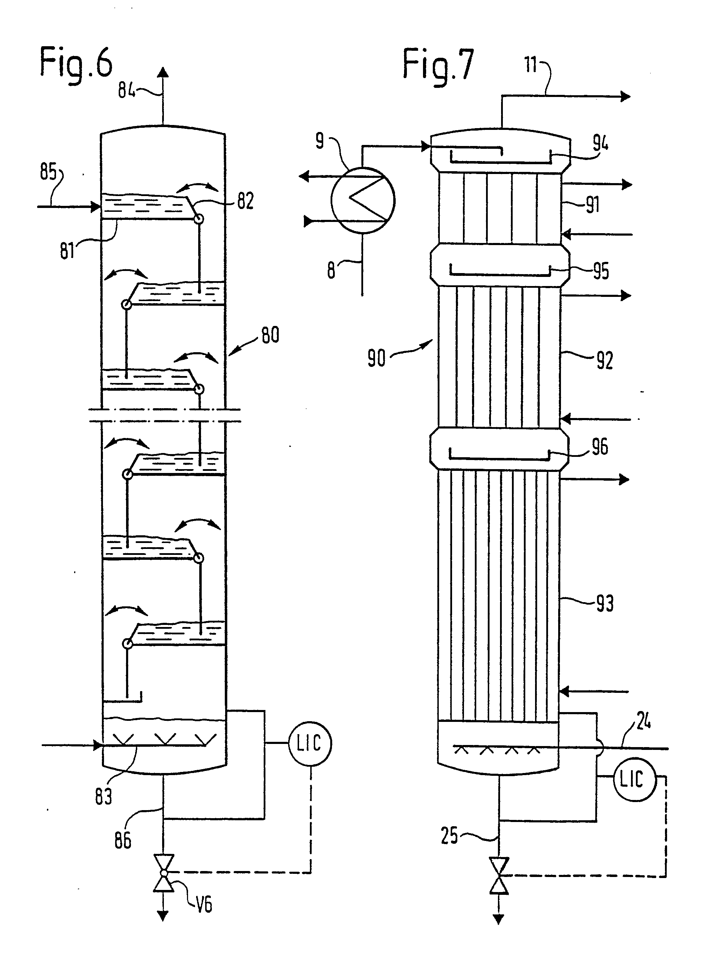

Die Ausbildung des Verweilzeitbehälters 19 kann vorzugsweise in Form einer senkrecht angeordneten Gegenstrom-Boden-Kolonne 80 erfolgen, wie sie mit Fig. 6 dargestellt ist. Diese Bodenkolonne 80 weist eine Anzahl Böden 81 auf, wobei jeder Boden 81 an seinem freien Ende mit einem Überlaufwehr 82 versehen ist. Jedes einzelne Überlaufwehr 82 kann durch magnetische Übertragung oder andere geeignete Kopplungen hinsichtlich seiner Höhe verändert werden, was einer Veränderung der Durchlaufzeit durch diese Bodenkolonne 80 gleichkommt. Hierdurch kann die Aufenthaltsdauer der Flüssigkeit den jeweiligen Bedürfnissen angepaßt werden. Die Treibdampfzugabe erfolgt über den Verteiler 83 im Sumpf der Bodenkolonne 80, so daß der Treibdampf die Flüssigkeitsstände aller Böden 81 durchperlen muß. Unter den genannten Verhältnissen stört der Druckverlust der Böden nicht, da die über die Sammelleitung 84 aus der Bodenkolonne 80 austretenden Dämpfe vor Erreichen der Vakuumanlage in einem Kondensator niedergeschlagen werden. Die Flüssigkeit wird über den Zulauf 85 auf den alleroberstén Boden 82 gegeben und schließlich über die mit dem Steuerventil $V_6$ versehene Leitung 86 abgezogen und der nachgeschalteten Schlußzone zugeführt.

Es ist bereits festgestellt worden, daß die Bereithaltung eines Verweilzeitbehälters nicht in jedem Falle erforderlich ist. Vielmehr kann es zur Entsäuerung und/oder Desodorierung von thermisch sehr empfindlichen Speiseölen wie beispielsweise Sonnenblumenöl zweckmäßig sein, auf den Verweilzeitbehälter zu verzichten, um einen raschen Durchsatz des Öles durch den Hochtemperaturteil der Anlage zu ermöglichen.

Die erfindungsgemäße Anlage sieht wenigstens zwei verschiedene Gegenstrom-Fallfilm-Treibdampfdestillations-Zonen vor, die in verschiedenen, hintereinander arbeitenden und untereinander durch Dampf- und Flüssigkeitsteilung verbundenen Fallfilmkolonnen realisiert sind. Zu jeder Fallfilmkolonne gehört ein Verteiler, der das Rohöl auf die Wände der Rieselkanäle — oder deren Äquivalenteverteilt, ferner Rieselkanäle mit im wesentlichen einheitlichem hydraulischem Durchmesser oder dessen Äquivalent bei nicht-rohrförmigen bzw. nicht-zylindrischen Rieselkanälen, und schließlich einen Flüssigkeitssammler am unteren Ende der Rieselkanäle. Verschiedene Fallfilmkolonnen liegen dann vor, wenn deren hydraulische Durchmesser- bzw. deren Äquivalent bei nicht-rohrförmigen (nicht-zylindrischen) Rieselkanal-Durchmessern um mehr als 10 mm differieren.

Diese verschiedenen Gegenstrom-Fallfilm-Treibdampfdestillations-Zonen können in räumlich getrennten Fallfilmkolonnen realisiert werden. In diesem Falle verbindet eine Rohrleitung 17 bzw. 41 den Kopf der folgenden Fallfilmkolonne 22 bzw. 10 mit dem Sumpf der vorausgegangenen Fallfilmkolonne 10 bzw. 44.

Nach einer alternativen Ausführungsform können die verschiedenen Fallfilmkolonnen zur Realisierung der Anfangszone(n) und der Schlußzone der Gegenstrom-Fallfilm-Treibdampfdestillations-Zonen in einem einzigen Kolonnenschuß 90 integriert sein, wie das schematisch mit Fig. 7 dargestellt ist.

In dem dargestellten Kolonnenschuß 90 sind drei verschiedene Fallfilmkolonnen 91, 92 und 93 integriert. In den Fallfilmkolonnen 91 und 92 werden die beiden Teilzonen der Anfangszone und in der Fallfilmkolonne 93 die Schlußzone der Gegenstrom-Fallfilm-Treibdampfdestillations-Zonen realisiert. Schematisch ist angedeutet, daß in Fließrichtung der Flüssigkeit die hydraulischen Durchmesser der Rieselkanäle in den Fallfilmkolonnen 91, 92 und 93 fortlaufend kleinere Werte aufweisen, um den oben genannten Bedingungen zu genügen. Andererseits nimmt die Rohrzahl pro Fallfilmkolonne zu, um mindestens die eingangs erörterten Gesamt-Umfangsflächen einzuhalten. Jede einzelne Fallfilmkolonne 91, 92 und 93 ist mit einer Zuleitung und einer Ableitung für ein Heiz-Medium versehen, wie das schematisch angedeutet ist. Zum Betrieb wird die über die Leitung 8 herangeführte, bereits vorgewärmte Flüssigkeit im Hochtemperatur-Wärmetauscher 9 auf die Arbeitstemperatur gebracht und gelangt dann auf den Verteiler 94 in der Fallfilmkolonne 91. Die im Sumpf der Fallfilmkolonne 91 gesammelte Flüssigkeit wird über den Verteiler 95 erneut auf die Rieselkanäle der Fallfilmkolonne 92 verteilt. Das

12

nämliche erfolgt im Sumpf der Fallfilmkolonne 92, wo die Flüssigkeit vom Verteiler 96 erneut auf die Rieselkanäle der Fallfilmkolonne 93 verteilt wird. Die im Sumpf der Kolonne 93 angesammelte Flüssigkeit wird schließlich über die Leitung 25 abgezogen. In den Sumpf der Fallfilmkolonne 93 wird über die Leitung 24 Treibdampf eingeführt, der nach Durchströmen der verschiedenen Fallfilmkolonnen 93, 92 und 91 schließlich gemeinsam mit den aus der Flüssigkeit abgetrennten Verunreinigungen am Kopf der Fallfilmkolonne 91 über die Sammelleitung 11 abgezogen wird.

Mit dieser Ausführungsform kann die Verweilzeit der einzelnen Flüssigkeitsteilchen im Hochtemperaturteil der Anlage unterhalb 30 sec gehalten werden, obwohl drei getrennte, hintereinander arbeitende und untereinander in Dampf- und Flüssigkeitsleitung stehende Gegenstrom-Fallfilm-Treibdampfdestillations-Zonen vorgesehen sind. Trotz dieser drei verschiedenen Zonen ist die Differenz zwischen dem Treibdampfdruck im Sumpf der Kolonne 93 und dem (Treibdampf plus dampfförmige Verunreinigung)-Druck im Kopf der Fallfilmkolonne 91 sehr gering und beträgt beispielsweise lediglich 1,0 mbar.

Sofern eine Flashbehandlung vorgesehen ist — etwa weil das Rohöl mehr als 5 Gew.-% freie Fettsäuren und andere Leichtsieder enthält — ist der Flashbehälter 46 (vgl. Fig. 1a) zweckmäßigerweise zwischen dem Hochtemperatur-Wärmetauscher 9 und der ersten Fallfilmkolonne 10 bzw. 44 geschaltet. Vorzugsweise ist dieser Flashbehälter oberhalb des Kopfes dieser ersten Fallfilmkolonne 10 bzw. 44 angeordnet, so daß das geflashte Gemisch lediglich unter der Wirkung seines Gewichtes auf den Verteiler in der ersten Fallfilmkolonne 10 bzw. 44 gelangt. Die aus dem Flashbehälter 46 abgezogenen Dämpfe werden über eine Leitung 47 dem Sumpf des Kondensationssystems 12 zugeführt.

Auch die Flashzone kann innerhalb einer Fallfilm- bzw. Rieselkolonne realisiert sein — beispielsweise innerhalb einer, mit den Fig. 3 und 4 erläuterten, mit Kerzen 51 ausgerüsteten Fallfilmkolonne 50 (Länge ca. 1 bis 2 m) — wobei jedoch keine Treibdampfzuführung erfolgt. Daneben können einfache und übliche Flashbehälter 46 bekannter Bauart eingesetzt werden. Nach einem weiteren vorteilhaften Gesichtspunkt der Erfindung ist auch der Flashbehälter 46 in den Kolonnenschuß 90 integriert (in Fig. 7 nicht dargestellt).

Die nachstehenden Beispiele dienen zur weiteren Erläuterung der Erfindung, ohne diese einzuschränken.

## Beispiel 1

Zur Entsäuerung ist eine Anlage gemäß Fig. 1 zum Durchsatz von 10 000 kg Palmöl pro Stunde ausgelegt.

Das Palmöl weist einen Gehalt von 5 Gew.-% Fettsäure auf und wird dem Lagertank 1 bei einer Temperatur von 60 °C entnommen. Der Kopf der Entgasungsstufe 4 wird bei einem Druck von 200 mbar betrieben. Im Wärmetauscher 27 erfolgt die Aufheizung des entgasten aber noch wasserhaltigen Öles (Wassergehalt im Mittel 0,1 Gew.-%) bis auf 243 °C im Tausch mit dem aus dem Sumpf der Fallfilmkolonne 22 abgezogenen Fertigöl. Die dabei im Tauscher 27 auszutauschende Wärmemenge beträgt 1 065 000 kcal/h (4 458 000 KJ/h). Hierbei wird das Fertigöl bis auf 70 °C abgekühlt und kann dann mittels üblichem Kühlwasser im Schlußkühler 28 zur Verbesserung der Lagerstabilität bis auf 50 °C heruntergekühlt werden. Das im Wärmetauscher 27 auf 243 °C aufgeheizte Rohöl wird im Hochtemperatur-Wärmetauscher 9 auf 255 °C aufgeheizt, wozu 80 000 kcal/h (334 900 KJ/h) erforderlich sind. Mit dieser Temperatur erfolgt die Aufgabe auf den Kopfverteiler der Fallfilmkolonne 10, in der die Hauptabtrennung der flüchtigen Begleitstoffe bis auf einen Restgehalt von ca. 0,5 Gew.-% des Rohöldurchsatzes erfolgt. Die Fallfilmkolonne 10 weist 60 Rohre mit einem Innendurchmesser von 84 mm und einer Länge von 4 m auf, an deren Innenwand das Rohöl herabfließt. Die Schichtdicke des Ölfilms beträgt ca. 0,35 mm, und dessen Reynolds-Zahl liegt bei etwa 223. Bei einem Rohöldurchsatz von 10 000 kg/h und einem Trägerdampfdurchsatz von 0,5 Gew.-% des Rohöldurchsatzes herrscht bei einem Arbeitsdruck im Kopf der Fallfilmkolonne 10 von 5,3 mbar lediglich ein Druckverlust von 0,4 mbar. Das über den Stutzen 36 zugeführte Heizmedium — HT-Öl — wird mit einer Temperatur von etwa 270 °C zugeführt, so daß das Öl im Sumpf der Kolonne 10 eine Temperatur von etwa 263 °C aufweist.

Zur Entsäuerung von Palmöl ist die Einschaltung des Verweilzeitbehälters 19 zur Erzielung einer guten Ölenfärbung zweckmäßig. In diesem Falle bleibt das Ventil $V_1$ geschlossen und die Ventile $V_2$, $V_3$ und $V_4$ sind zu öffnen, so daß der Verweilzeitbehälter mit demjenigen Teil der Vakuumanlage in Verbindung steht, der die Einstellung eines Arbeitsdruckes von 200 mbar erlaubt. Zur Entfernung der Spaltprodukte der unter dem Zeiteinfluß stattfindenden thermischen Zersetzung der Farbstoffe wie z. B. Carotin, wird über die Leitung 18 Treibdampf in einer Menge von 30 bis 50 kg/h zugegeben, der zusammen mit den organischen Spaltprodukten im Kondensator 31 mittels Kühlwasser bei 60 °C kondensiert wird.

Das aus dem Verweilzeitbehälter 19 abgezogene, hitzegebleichte Öl wird mit 263 °C auf den Verteiler der Fallfilmkolonne 22 gegeben. Die letztere ist eine Rohrbündelkolonne mit 153 Rohren von 33 mm Innendurchmesser und einer Länge von 8 m. Die an der Innenwand der Rohre herabfließende Flüssigkeit weist eine Reynolds-Zahl um 277 auf ; die Schichtdicke des Flüssigkeitsfilms beträgt etwa 0,38 mm. Als Heizmedium dient HT-Öl mit einer Temperatur von 265 bis 266 °C. Im Sumpf der Kolonne 22 herrscht eine Temperatur von ca. 264 °C.

Über die Zuleitung werden stündlich 50 kg Edeldampf eingeführt. Hierbei ergibt sich ein Druckverlust

13

von kleiner 0,85 mbar in der Fallfilmkolonne 22, so daß für beide Fallfilmkolonnen 22 und 10 der Gesamtdruckverlust unter 1,25 mbar liegt. Bei einem Arbeitsdruck von 5,3 mbar im Kopf der Fallfilmkolonne 10 ergibt sich damit für den Sumpf der Fallfilmkolonne 22 ein Arbeitsdruck kleiner 6,25 mbar. Dieser geringe Sumpfdruck ist eine Ursache für den niedrigen Trägerdampfbedarf kleiner 0,5 % des Rohöldurchsatzes.

Über die Leitung 30 werden 5 g Zitronensäure pro Tonne Rohöl eingeführt, um die Lagerstabilität des Fertigöles zu verbessern.

### Beispiel 2

Zum Desodorieren ist eine Anlage gemäß Fig. 2 zum Durchsatz von 16 000 kg Palmöl/h ausgelegt. Der Gehalt des Palmöls an freien Fettsäuren beträgt maximal 0,375 Gew.-%.

Soweit besondere Angaben fehlen, erfolgt die Verfahrensführung im wesentlichen analog zu Beispiel 1.

Das entgaste Rohöl wird im Wärmetauscher 27 im Tausch gegen das ablaufende Fertigöl auf 243 °C aufgeheizt ; die hier auszutauschende Wärmemenge beträgt 1 705 000 kcal/h. Die restliche Aufheizung auf die Arbeitstemperatur von 255 °C erfolgt im Hochtemperatur-Wärmetauscher 9 mittels eines Hochtemperatur-Heizmediums ; die hier auszutauschende Wärmemenge beträgt 125 000 kcal/h (523 000 KJ/h).

Mit einer Arbeitstemperatur von 255 °C wird das Rohöl auf den Verteiler der Fallfilmkolonne 44 gegeben. Im vorliegenden Fall handelt es sich um eine Rohrbündelkolonne mit 54 Rohren mit einem Innendurchmesser von 120 mm und einer senkrechten Länge von 2 m. Der Arbeitsdruck im Kopf der Kolonne 44 wird bei 5,3 mbar gehalten. Innerhalb der Kolonne 44 wird die Hauptmenge an freien Fettsäuren in der Größenordnung von etwa 35 kg/h abgetrennt (0,375 Gew.-% entspricht ca. 60 kg/h freie Fettsäuren).

Im Sumpf der Kolonne 44 weist das Öl eine Temperatur von ca. 261 °C auf und wird mit dieser Temperatur auf den Kopf des Verteilers der Fallfilmkolonne 10 gegeben. Die Fallfilmkolonne 10 ist ebenfalls als Rohrbündelkolonne mit 66 Rohren mit einem Innendurchmesser von 84 mm und 3 m senkrechter Länge ausgebildet. In dieser Zone ermäßigt sich der Gehalt an freien Fettsäuren pro Stunde um weitere 15 kg. Im Sumpf der Kolonne 10 weist das Öl eine Temperatur von 264 °C auf und wird mit dieser Temperatur in den Verweilzeitbehälter 19 eingeführt. In den Verweilzeitbehälter werden pro Stunde 64 kg Trägerdampf als sog. Edeldampf eingeführt. Die Trägerdampftemperatur wird bei etwa 264 °C gehalten.

Das aus dem Verweilzeitbehälter abgezogene, hitzegebleichte Palmöl wird mit einer Temperatur von 264 °C auf den Verteiler der Fallfilmkolonne 22 gegeben. Diese ist ebenfalls als Fallfilmkolonne ausgebildet und weist 153 Rohre mit einem Innendurchmesser von 33 mm und 7 m senkrechter Länge auf. In den Sumpf der Fallfilmkolonne 22 werden pro Stunde über die Leitung 24 64 kg Edeldampf eingeführt. Weiterhin werden über die Leitung 30 5 g Zitronensäure pro Tonne Fertigöl eingeführt, um dessen Lagerstabilität zu verbessern. Das Fertigöl wird über die Leitung 25 mit einer Temperatur von ca. 265 °C abgezogen und im Wärmetausch gegen das Rohöl im Wärmetauscher 27 auf 70 °C abgekühlt.

Anschließend wird das Fertigöl im Wärmetauscher 28 auf 50 °C heruntergekühlt.

Bei einem Druckverlust von 0,97 mbar über alle drei Zonen liegt der Sumpfdruck nur wenig über dem Kopfdruck von 5,3 mbar. Dieser geringe Sumpfdruck und die günstigen Gegenstrom- und Austauschbedingungen zwischen dem herabrieselnden Ölfilm und den aufsteigenden Dämpfen sind die Ursache für den niedrigen Trägerdampfbedarf.

Nachstehend sind nochmals die wichtigsten Parameter bei der Entsäuerung (und Desodorierung) bzw. bei der alleinigen Desodorierung von Palmöl in einer Anlage gemäß Fig. 1 oder Fig. 2 bei einem Durchsatz von 10 000 kg Öl pro Std. für die Entsäuerung bzw. 16 000 kg/h für die Desodorierung zusammengestellt.

(Siehe Tabelle Seite 15 f.)

| Fallfilm-kolonne (Nr.) | Rohr-durchmesser (mm) | Rohr-länge (m) | Rohr-zahl | Re-Dampf | Re-Fl. | Film-dicke (mm) | Verweil-zeit (sec) | Druck-verlust (mbar) |
|---|---|---|---|---|---|---|---|---|
| Entsäuerung in zwei Zonen gemäß Fig. 1 | | | | | | | | |
| 10 | 108 | 4 | 60 | 1096 | 223 | 0,35 | 7,8 | 0,08 |
| 22 | 33 | 8 | 153 | 326 | 277 | 0,38 | 13,6 | 0,79 |
| Entsäuerung in drei Stufen gemäß Fig. 2 | | | | | | | | |
| 44 | 120 | 2 | 54 | 1508 | 223 | 0,35 | 3,9 | 0,027 |
| 10 | 84 | 3 | 66 | 656 | 255 | 0,37 | 5,4 | 0,044 |
| 22 | 33 | 7 | 153 | 327 | 277 | 0,38 | 11,9 | 0,74 |
| Desodorierung in zwei Zonen gemäß Fig. 1 | | | | | | | | |
| 10 | 108 | 4 | 60 | 354 | 363 | 0,41 | 5,7 | 0,019 |
| 22 | 33 | 8 | 153 | 343 | 452 | 0,43 | 9,4 | 1,08 |
| Desodorierung in drei Stufen gemäß Fig. 2 | | | | | | | | |
| 44 | 120 | 2 | 54 | 380 | 364 | 0,41 | 2,9 | 0,009 |
| 10 | 84 | 3 | 66 | 331 | 424 | 0,43 | 3,9 | 0,032 |
| 22 | 33 | 7 | 153 | 298 | 465 | 0,45 | 8,5 | 0,93 |

**Patentansprüche**

1. Verfahren zum Desodorieren und/oder Entsäuern von Speiseölen, Fetten und Estern nach dem Prinzip der kontinuierlichen Gegenstrom-Fallfilm-Treibdampfdestillation in einem von außen aufgezwungenen Temperaturfeld, wobei die auf 220 bis 280 °C erwärmte Flüssigkeit unter einem Arbeitsdruck zwischen 2 und 10 mbar als Dünnschicht einer Schichtdicke kleiner 1,0 mm an der Wand von, im wesentlichen vertikal angeordneten, Rieselkanäle bildenden Flächen herabfließt, von denen wenigstens ein Teil auf einer höheren Temperatur als die herabfließende Flüssigkeit gehalten wird, und im Gegenstrom Dampf einer niedermolekularen Flüssigkeit durch diese Rieselkanäle geführt wird, dadurch gekennzeichnet, daß wenigstens zwei hintereinander arbeitende und untereinander in Dampf- und Flüssigkeitsleitung stehende Gegenstrom-Fallfilm-Treibdampfdestillations-Zonen eingesetzt werden, von denen die in Richtung der herabfließenden Flüssigkeit stromabwärts gelegene Schlußzone kleinere hydraulische Rieselkanal-Durchmesser oder deren Äquivalent bei nicht-rohrförmigen Rieselkanälen aufweist, als die stromaufwärts gelegene(n) Anfangszone(n), und die Treibdampfzuführung ausschließlich im Sumpf der Schlußzone erfolgt.

2. Verfahren nach Anspruch 1, dadurch gekennzeichnet, daß in der unmittelbar an die Flüssigkeitsaufgabe anschließenden, wenigstens zwei theoretische Trennstufen gewährleistenden Anfangszone die Dämpfe durch Rieselkanäle mit einem hydraulischen Durchmesser von 73 bis 150 mm oder dessen Äquivalent bei nicht-rohrförmigen Rieselkanälen strömen ; und in der dahinter arbeitenden, wenigstens sechs theoretische Trennstufen gewährleistenden Schlußzone die Dämpfe durch Rieselkanäle mit einem hydraulischen Durchmesser von 25 bis 33 mm oder dessen Äquivalent bei nicht-rohrförmigen Rieselkanälen strömen.

3. Verfahren nach Anspruch 2, dadurch gekennzeichnet, daß die Anfangszone in zwei Teilzonen unterteilt ist, wobei in der unmittelbar an die Flüssigkeitsaufgabe anschließenden ersten Teilzone die Dämpfe durch Rieselkanäle mit einem hydraulischen Rieselkanaldurchmesser von 150 bis 120 mm oder dessen Äquivalent bei nicht-rohrförmigem Rieselkanaldurchmesser strömen ; und in der sich unmittelbar anschließenden zweiten Teilzone die Dämpfe durch Rieselkanäle mit einem hydraulischen Rieselkanaldurchmesser von 73 bis 120 mm oder dessen Äquivalent bei nicht-rohrförmigem Rieselkanaldurchmesser strömen.

4. Verfahren nach einem der Ansprüche 1 bis 3, dadurch gekennzeichnet, daß die verschiedenen Gegenstrom-Fallfilm-Treibdampfdestillations-Zonen innerhalb an sich bekannter, angepaßter Fallfilmkolonnen verwirklicht sind.

5. Verfahren nach einem der Ansprüche 1 bis 4, dadurch gekennzeichnet, daß der Druckverlust über sämtliche Gegenstrom-Fallfilm-Treibdampfdestillations-Zonen kleiner 2,0 mbar und vorzugsweise kleiner 1,4 mbar gehalten wird.

6. Verfahren nach einem der Ansprüche 1 bis 5, dadurch gekennzeichnet, daß die Schichtdicke des Flüssigkeitsfilms in der Anfangszone zum Entsäuern zwischen 0,2 und 0,5 mm und zum Desodorieren zwischen 0,25 und 0,55 mm gehalten wird ; und die Schichtdicke des Flüssigkeitsfilms in der Schlußzone zum Entsäuern ewischen 0,35 und 0,60 mm und zum Desodorieren zwischen 0,35 und 0,70 mm gehalten wird.

7. Verfahren nach einem der Ansprüche 1 bis 6, dadurch gekennzeichnet, daß die Reynolds-Zahl der herabfließenden Flüssigkeit in der Anfangszone zum Entsäuern zwischen 200 und 280 und zum Desodorieren zwischen 350 und 400 gehalten wird ; und die Reynolds-Zahl der Flüssigkeit in der Schlußzone zum Entsäuern zwischen 250 und 300, zum Desodorieren zwischen 400 und 500 gehalten wird.

8. Verfahren nach einem der Ansprüche 1 bis 7, dadurch gekennzeichnet, daß in der Anfangszone die Temperatur der Rieselkanäle um wenigstens 4 °K über der Flüssigkeitstemperatur und in der Schlußzone im Bereich zwischen Flüssigkeitstemperatur und max. 2 °K höher gehalten wird.

9. Verfahren nach einem der Ansprüche 1 bis 8, dadurch gekennzeichnet, daß die Gesamtverweildauer bestimmter Flüssigkeitsteilchen in der Anfangszone und in der Schlußzone unter 30 sec gehalten wird.

10. Verfahren nach einem der Ansprüche 1 bis 9, dadurch gekennzeichnet, daß die zu behandelnde Flüssigkeit in einer Vorstufe unter einem Druck von 60 bis 280 mbar und bei einer Temperatur zwischen 40 und 100 °C entgast und mit dem unter diesen Bedingungen verbleibenden Wassergehalt von etwa 0,05 bis 0,2 Gew.-% in die Anfangszone eingeführt wird.

11. Verfahren nach einem der Ansprüche 1 bis 10, dadurch gekennzeichnet, daß im Falle von Flüssigkeiten mit besonders hohem Anteil an freien Fettsäuren und anderen Leichtsiedern, unmittelbar vor Eintritt in die Anfangszone eine Flashbehandlung bei praktisch gleichem Arbeitsdruck wie in der Anfangszone vorgenommen wird, und die bei der Flashung frei werdenden Dämpfe abgetrennt und kondensiert werden.

12. Verfahren nach einem der Ansprüche 1 bis 11, dadurch gekennzeichnet, daß eine Verweilzone vorgesehen wird, in welche die Flüssigkeit aus dem Sumpf der Anfangszone geführt, und dort unter einem Druck von 60 bis 280 mbar bei der Sumpftemperatur der vorausgegangenen Anfangszone etwa 5 bis 60 min lang gehalten wird, bevor die Flüssigkeit auf den Verteiler der Schlußzone gegeben wird.

13. Verfahren nach Anspruch 12, dadurch gekennzeichnet, daß in die Verweilzone eine kleine Menge Dampf einer niedermolekularen Flüssigkeit in der Größenordnung von etwa 0,02 bis 0,2 Gew.-% des Flüssigkeitsdurchsatzes eingeführt wird.

14. Verfahren nach Anspruch 13, dadurch gekennzeichnet, daß der in der Verweilzone anfallende, verunreinigte Treibdampf unmittelbar im Kühlwasser eines Kondensationskühlers niedergeschlagen wird.

15. Verfahren nach einem der Ansprüche 1 bis 14, dadurch gekennzeichnet, daß in den Sumpf der Schlußzone oder in die dort abgezogene und teilweise abgekühlte Flüssigkeit eine kleine Menge Komplexbildner eingeführt wird.

16. Verfahren nach einem der Ansprüche 1 bis 15, dadurch gekennzeichnet, daß als Dampf der niedermolekularen Flüssigkeit Wasserdampf dient, insbesondere sogenannter Edeldampf, der aus vorher destilliertem und entgastem Wasser erzeugt worden ist.

17. Anlage zur Durchführung des Verfahrens nach einem der Ansprüche 1 bis 16, gekennzeichnet durch zwei verschiedene, hintereinander arbeitende und untereinander durch Dampf- und Flüssigkeitsleitung verbundene Fallfilmkolonnen (10, 22), von denen die Fallfilmkolonne (10) Rieselkanäle mit einem hydraulischen Durchmesser von 73 bis 150 mm oder dessen Äquivalent bei nicht-rohrförmigen Rieselkanälen und die Fallfilmkolonne (22) Rieselkanäle mit einem hydraulischen Durchmesser von 25 bis 33 mm oder dessen Äquivalent bei nicht-rohrförmigen Rieselkanälen aufweist.

18. Anlage nach Anspruch 17, dadurch gekennzeichnet, daß die Fallfilmkolonne (10) eine Länge der Rieselkanäle von 2 bis 6 m, und die Fallfilmkolonne (22) eine Länge der Rieselkanäle von 6 bis 10 m aufweist.

19. Anlage zur Durchführung des Verfahrens nach einem der Ansprüche 1 bis 16, gekennzeichnet durch drei verschiedene, hintereinander arbeitende und untereinander durch Dampf- und Flüssigkeitsleitungen verbundene Fallfilmkolonnen (44, 10, 22), von denen die Fallfilmkolonne (44) Rieselkanäle mit einem hydraulischen Durchmesser von 120 bis 150 mm oder dessen Äquivalent bei nicht-rohrförmigen Rieselkanälen, die Fallfilmkolonne (10) Rieselkanäle mit einem hydraulischen Durchmesser von 73 bis 120 mm oder dessen Äquivalent bei nicht-rohrförmigen Rieselkanälen, und die Fallfilmkolonne (22) Rieselkanäle mit einem hydraulischen Durchmesser von 25 bis 33 mm oder dessen Äquivalent bei nicht-rohrförmigen Rieselkanälen aufweist.

20. Anlage nach Anspruch 19, dadurch gekennzeichnet, daß die Fallfilmkolonne (44) eine Länge der Rieselkanäle von 2 bis 3 m, die Fallfilmkolonne (10) eine Länge der Rieselkanäle von 3 bis 4 m, und die Fallfilmkolonne (22) eine Länge der Rieselkanäle von 6 bis 10 m aufweist.

21. Anlage nach einem der Ansprüche 17 bis 20, dadurch gekennzeichnet, daß die Rieselkanäle von wenigstens einer Fallfilmkolonne (10, 22, 44), vorzugsweise die Rieselkanäle der ersten Fallfilmkolonne (10 oder 44), von innen berieselte, im wesentlichen vertikal angeordnete Rohre eines Wärmetauschers sind.

22. Anlage nach einem der Ansprüche 17 bis 20, dadurch gekennzeichnet, daß die Rieselkanäle von wenigstens einer Fallfilmkolonne (10, 22, 44), vorzugsweise die Rieselkanäle der ersten Fallfilmkolonne (10 oder 44) zwischen planparallelen, im wesentlichen vertikal angeordneten, von innen beheizten Doppelmantelflächen ausgebildet sind, wobei die Abstände zwischen benachbarten Doppelmantelflächen im Hinblick auf die geforderten hydraulischen Durchmesser der Rieselkanäle gewählt sind.

23. Anlage nach einem der Ansprüche 17 bis 20, dadurch gekennzeichnet, daß die Rieselkanäle von wenigstens einer Fallfilmkolonne (10, 22, 44), vorzugsweise die Rieselkanäle der ersten Fallfilmkolonne (10 oder 44), zwischen im wesentlichen vertikal angeordneten, von innen beheizten Kerzen (51) ausgebildet sind, wobei die Abstände zwischen benachbarten Kerzen (51) im Hinblick auf die Abstände der geforderten hydraulischen Durchmesser der Rieselkanäle gewählt sind (Fig. 4).

24. Anlage nach einem der Ansprüche 17 bis 23, dadurch gekennzeichnet, daß die Fallfilmkolonne (22) eine mit niedrigem Druckverlust arbeitende, echte Rieselkolonne (70) ohne Beheizung der in dieser Kolonne angeordneten Filmaustauschflächen ist (Fig. 5).

25. Anlage nach einem der Ansprüche 17 bis 24, dadurch gekennzeichnet, daß parallel zu der den Sumpf der Fallfilmkolonne (10) mit dem Kopf der Fallfilmkolonne (22) verbindenden Leitung (17) oder parallel zu der den Sumpf der Fallfilmkolonne (44) mit dem Kopf der Fallfilmkolonne (10) verbindenden Leitung (41) ein wahlweise zuschaltbarer Verweilzeitbehälter (19) vorhanden ist.

26. Anlage nach Anspruch 25, dadurch gekennzeichnet, daß der Verweilzeitbehälter (19) eine senkrecht stehende Gegenstrom-Boden-Kolonne (80) ist, deren Überlaufwehre (82) hinsichtlich ihrer Höhe verstellbar sind (Fig. 6).

27. Anlage nach Anspruch 25 oder 26, dadurch gekennzeichnet, daß eine Leitung (21) für die im Verweilzeitbehälter (19) anfallenden Dämpfe an den Kompressionsstufen (16, 16a) des Vakuum erzeugenden Systems vorbei zu einem Kondensationskühler (31) führt.

28. Anlage nach einem der Ansprüche 17 bis 27, dadurch gekennzeichnet, daß zwischen dem Hochtemperatur-Wärmetauscher (9) und der ersten Fallfilmkolonne (10) eine Flashzone innerhalb eines Behälters (46) realisiert ist.

29. Anlage nach Anspruch 28, dadurch gekennzeichnet, daß der Behälter (46) oberhalb der ersten Fallfilmkolonne (10 oder 44) angeordnet ist, so daß das geflashte Gemisch lediglich unter der Wirkung seines eigenen Gewichtes auf den Verteiler in der ersten Fallfilmkolonne (10 oder 44) gelangt.

30. Anlage nach Anspruch 28 oder 29, dadurch gekennzeichnet, daß die aus dem Flashbehälter (46) abgezogenen Dämpfe über eine Leitung (47) dem Sumpf des Kondensationssystems (12) zuführbar sind.

31. Anlage nach einem der Ansprüche 17 bis 30, dadurch gekennzeichnet, daß sämtliche Fallfilmkolonnen in einen einzigen Kolonnenschuß (90) integriert sind und untereinander über konisch verlaufende Schweißverbindungen verbunden sind (Fig. 7).

32. Anlage nach Anspruch 31, dadurch gekennzeichnet, daß in den Kolonnenschuß (90) auch der Flashbehälter (46) integriert ist.


**Claims**

1. A process for deodorizing and/or physical refining of edible oils, fats and esters according to the principle of continuous countercurrent falling film stripping steam distillation in an externally imposed temperature field, wherein the liquid heated to 220 to 280 °C, at a working pressure between 2 and 10 mbar, flows down as a thin film having a film thickness of less than 1.0 mm at the wall of substantially vertically arranged surfaces forming trickle passages, at least a part of which is kept at a higher temperature than the downflowing liquid, and vapor of a low-molecular liquid is passed in countercurrent mode through said trickle passages, characterized in that at least two countercurrent falling film stripping steam distillation zones operating in series and being in vapor and liquid communication with each other are provided, the final zone thereof, which is disposed downstream in the direction of the downflowing liquid, having smaller hydraulic equivalent diameters of the trickle passages, or the equivalent thereof in the case of non-tubular trickle passages, than the initial zone(s) disposed upstream ; and the stripping steam supply is carried out exclusively at the bottom of the final zone.

2. The process according to claim 1, characterized in that in the initial zone directly adjacent to the liquid charge and ensuring at least two theoretical separation stages the vapors flow through trickle passages having a hydraulic equivalent diameter of 73 to 150 mm, or the equivalent thereof in the case of non-tubular trickle passages ; and in the final zone operating downstream thereof and ensuring at least six theoretical separation stages the vapors flow through trickle passages having a hydraulic equivalent diameter of 25 to 33 mm, or the equivalent thereof in the case of non-tubular trickle passages.

3. The process according to claim 2, characterized in that the initial zone is subdivided into two sub-zones, wherein in the first sub-zone directly adjacent to the liquid charge the vapors flow through trickle passages having a hydraulic equivalent diameter of 150 to 120 mm, or the equivalent thereof in the case of a non-tubular trickle passage diameter ; and in the second sub-zone directly adjacent thereto the vapors flow through trickle passages having a hydraulic equivalent diameter of 73 to 120 mm, or the equivalent thereof in the case of a non-tubular trickle passage diameter.

4. The process according to anyone of claims 1 to 3, characterized in that the various countercurrent falling film stripping steam distillation zones are realized within per se known, adapted falling film columns.

5. The process according to anyone of claims 1 to 4, characterized in that the pressure drop through all countercurrent falling film stripping steam distillation zones is kept less than 2.0 mbar and preferably less than 1.4 mbar.

6. The process according to anyone of claims 1 to 5, characterized in that the film thickness of the liquid film in the initial zone is kept between 0.2 and 0.5 mm for physical refining and between 0.25 and 0.55 mm for deodorization ; and the film thickness of the liquid film in the final zone is kept between 0.35 and 0.60 mm for physical refining and between 0.35 and 0.70 mm for deodorization.

7. The process according to anyone of claims 1 to 6, characterized in that the Reynolds number of the downflowing liquid in the initial zone is kept between 200 and 280 for physical refining and between 350 and 400 for deodorization ; and the Reynolds number of the liquid in the final zone is kept between 250 and 300 for physical refining and between 400 and 500 for deodorization.

8. The process according to anyone of claims 1 to 7, characterized in that in the initial zone the temperature of the trickle passages is kept by at least 4 °K in excess of the liquid temperature and in the final zone is kept within the range between the liquid temperature and at most 2 °K in excess thereof.

9. The process according to anyone of claims 1 to 8, characterized in that the total residence time of predetermined liquid particles in the initial zone and in the final zone is kept below 30 sec.

10. The process according to anyone of claims 1 to 9, characterized in that the liquid to be treated is degasified in a pretreatment stage under a pressure of 60 to 280 mbar and at a temperature between 40 and 100 °C and is introduced into the initial zone with a water content of approx. 0.05 to 0.2 % by weight remaining under said conditions.

11. The process according to anyone of claims 1 to 10, characterized in that in the case of liquids having a particularly high proportion of free fatty acids and other low-boiling components, immediately before entry into the initial zone a flash treatment is carried out at practically the same working pressure as in the initial zone ; and the vapors released upon the flashing are separated and condensed.

12. The process according anyone of claims 1 to 11, characterized in that a residence zone is provided to which the liquid is supplied from the bottom of the initial zone and in which it is held under a pressure of 60 to 280 mbar at the bottom temperature of the preceding initial zone for approx. 5 to 60 min before being fed to the distributor of the final zone.

13. The process according to claim 12, characterized in that a small amount of vapor of a low-molecular liquid in the order of approx. 0.02 to 0.2 % by weight of the liquid throughput is introduced into the residence zone.

14. The process according to claim 13, characterized in that the contaminated stripping steam obtained in the residence zone is condensed directly in the cooling water of a condensation cooler.

15. The process according to anyone of claims 1 to 14, characterized in that a small amount of complexing agent is introduced into the bottom of the final zone or into the liquid with drawn therefrom and being partially cooled.

16. The process according to anyone of claims 1 to 15, characterized in that as the vapor of the low-molecular liquid steam is used, in particular so-called super-pure steam, produced from previously distilled and degasified water.

17. An apparatus for carrying out the process according to anyone of claims 1 to 16, characterized by two different falling film columns (10, 22), operating in series and being in vapor and liquid communication with each other ; the falling film column (10) thereof comprising trickle passages having a hydraulic equivalent diameter of 73 to 150 mm, or the equivalent thereof in the case of non-tubular trickle passages ; and the falling film column (22) comprising trickle passages having a hydraulic equivalent diameter of 25 to 33 mm, or the equivalent thereof in the case of non-tubular trickle passages.

18. The apparatus according to claim 17, characterized in that the falling film column (10) has a length of the trickle passages of 2 to 6 m ; and the falling film column (22) has a length of the trickle passages of 6 to 10 m.

19. An apparatus for carrying out the process according to anyone of claims 1 to 16, characterized by three different falling film columns (44, 10, 22) operating in series and being in vapor and liquid communication with each other ; the falling film column (44) comprising trickle passages having a hydraulic equivalent diameter of 120 to 150 mm, or the equivalent thereof in the case of non-tubular trickle passages ; the falling film column (10) comprising trickle passages having a hydraulic equivalent diameter of 73 to 120 mm, or the equivalent thereof in the case of non-tubular trickle passages ; and the falling film column (22) comprising trickle passages having a hydraulic equivalent diameter of 25 to 33 mm, or the equivalent thereof in the case of non-tubular trickle passages.

20. The apparatus according to claim 19, characterized in that the falling film column (44) has a length of the trickle passages of 2 to 3 m ; the falling film column (10) has a length of the trickle passages of 3 to 4 m ; and the falling column (22) has a length of the trickle passages of 6 to 10 m.

21. The apparatus according to anyone of claims 17 to 20, characterized in that the trickle passages of at least one falling film column (10, 22, 44), preferably the trickle passages of the first falling film column (10 or 44), are internally sprinkled, substantially vertically arranged tubes of a heat exchanger.

22. The apparatus according to anyone of claims 17 to 20, characterized in that the trickle passages of at least one falling film column (10, 22, 44), preferably the trickle passages of the first falling film column (10 or 44), are formed between plane-parallel, substantially vertically arranged, internally heated double shell surfaces, the spacings between adjacent double shell surfaces being selected with regard to the required hydraulic equivalent diameters of the trickle passages.

23. The apparatus according to anyone of claims 17 to 20, characterized in that the trickle passages of at least one falling film column (10, 22, 44), preferably the trickle passages of the first falling film column (10 or 44), are formed between substantially vertically arranged, internally heated cartridges (51), the spacings between adjacent cartridges (51) being selected with regard to the spacings of the required hydraulic equivalent diameters of the trickle passages (Fig. 4).

24. The apparatus according to anyone of claims 17 to 23, characterized in that the falling film column (22) is a true trickle column (70) operating with low pressure drop, without heating of the film exchange surfaces arranged in this column (Fig. 5).

25. The apparatus according to anyone of claims 17 to 24, characterized in that a selectively connectable hold-up vessel (19) is provided in parallel to the line (17) connecting the bottom of the falling film column (10) to the head of the falling film column (22) or in parallel to the line (41) connecting the bottom of the falling film column (44) to the head of the falling film column (10).

26. The apparatus according to claim 25, characterized in that the hold-up vessel (19) is an upright countercurrent plate column (80), the overflow weirs (82) thereof are adjustable as to their height (Fig. 6).

27. The apparatus according to claim 25 or 26, characterized in that the vapors obtained in the hold-up vessel (19) are capable of being supplied through the line (21) past the compression stages (16, 16a) of the vacuum-producing system directly to a condensation cooler (31) and are capable of being precipitated there without burdening the vacuum-producing system.

28. The apparatus according to anyone of claims 17 to 27, characterized in that between the high-temperature heat exchanger (9) and the first falling film column (10) a flash zone within a vessel (46) is realized.

29. The apparatus according to claim 28, characterized in that the vessel (46) is disposed above the first falling film column (10 or 44) so that the flashed mixture gets onto the distributor in the first falling film column (10 or 44) only by the action of its own weight.

30. The apparatus according to claim 28 or 29, characterized in that the vapors withdrawn from the flash vessel (46) are capable of being supplied to the bottom of the condensation system (12) through a line (47).

31. The apparatus according to anyone of claims 17 to 30, characterized in that all falling film columns are integrated in a single column section (90) and connected to each other through conically extending weld joints (Fig. 7).

32. The apparatus according to claim 31, characterized in that also the flash vessel (46) is integrated in the column section (90).

## Revendications

1. Procédé de désodorisation et/ou de désacidification d'huiles comestibles, de graisses et d'esters selon le principe de la distillation avec entraînement à la vapeur, à film en chute libre et à contre-courant, dans une plage de températures imposée de l'extérieur, qui consiste à faire s'écouler vers le bas du liquide porté entre 220 et 280 °C, sous une pression de travail comprise entre 2 et 10 mbar, en tant que couche mince ayant une épaisseur inférieure à 1,0 mm, sur la paroi de surfaces disposées sensiblement verticalement et formant des canaux de ruissellement, dont une partie au moins est maintenue à une température plus élevée que le liquide qui s'écoule, et à envoyer à contre-courant de la vapeur d'un· liquide à bas poids moléculaire dans ces canaux de ruissellement, caractérisé en ce qu'il consiste à mettre en œuvre au moins deux zones de distillation par entraînement à la vapeur, à film en chute libre et à contre-courant, fonctionnant l'une derrière l'autre, communiquant entre elles par des conduits pour la vapeur et pour le liquide et dont la zone de queue, s'étendant en aval suivant la direction d'écoulement du liquide, a un diamètre hydraulique du canal de ruissellement ou son équivalent, dans le cas de canaux de ruissellement non tubulaires, plus petit que la (ou les) zone(s) en amont, et à effectuer l'envoi de vapeur d'entraînement exclusivement dans le bas de la zone de queue.

2. Procédé suivant la revendication 1, caractérisé en ce que, dans la zone initiale raccordée directement au chargement du liquide et assurant au moins deux plateaux théoriques, les vapeurs s'écoulent dans des canaux de ruissellement ayant un diamètre hydraulique de 73 à 150 mm ou son équivalent pour des canaux de ruissellement non tubulaires et en ce que, dans la zone de queue fonctionnant derrière et assurant au moins six plateaux théoriques, les vapeurs s'écoulent dans des canaux de ruissellement ayant un diamètre hydraulique de 25 à 33 mm ou son équivalent pour des canaux de ruissellement non tubulaires.

3. Procédé suivant la revendication 2, caractérisé en ce qu'il consiste à subdiviser la zone initiale en deux zones partielles, les vapeurs s'écoulant dans la première zone partielle raccordée directement au chargement du liquide dans des canaux de ruissellement ayant un diamètre hydraulique de canal de ruissellement de 150 à 120 mm ou son équivalent pour un diamètre de canal de ruissellement non tubulaire et, dans la seconde zone partielle raccordée directement, les vapeurs s'écoulent dans des canaux de ruissellement ayant un diamètre hydraulique de canal de ruissellement de 73 à 120 mm ou son équivalent pour un diamètre de canal de ruissellement non tubulaire.

4. Procédé suivant l'une des revendications 1 à 3, caractérisé en ce qu'il consiste à réaliser les diverses zones de distillation par entraînement à la vapeur en film en chute libre et à contre-courant dans des colonnes à film en chute libre adaptées, connues en elles-mêmes.

5. Procédé suivant l'une des revendications 1 à 4, caractérisé en ce qu'il consiste à maintenir la perte de charge sur l'ensemble des zones de distillation par entraînement à la vapeur, à film en chute libre et à contre-courant, à une valeur inférieure à 2,0 mbar et, de préférence, à une valeur inférieure à 1,4 mbar.

6. Procédé suivant l'une des revendications 1 à 5, caractérisé en ce qu'il consiste à maintenir l'épaisseur de la couche du film de liquide dans la zone initiale pour la désacidification entre 0,2 et 0,5 mm et pour la désodorisation entre 0,25 et 0,55 mm, et à maintenir l'épaisseur de la couche du film de liquide dans la zone de queue pour la désacidification entre 0,35 et 0,60 mm et pour la désodorisation entre 0,35 et 0,70 mm.

7. Procédé suivant l'une des revendications 1 à 6, caractérisé en ce qu'il consiste à maintenir le nombre de Reynolds du liquide qui s'écoule vers le bas dans la zone initiale pour la désacidification entre 200 et 280 et pour la désodorisation entre 350 et 400, et à maintenir le nombre de Reynolds du liquide dans la zone de queue pour la désacidification entre 250 et 300 et pour la désodorisation entre 400 et 500.

8. Procédé suivant l'une des revendications 1 à 7, caractérisé en ce qu'il consiste à maintenir dans la zone initiale la température des canaux de ruissellement supérieure d'au moins 4 °K à la température du liquide et dans la zone de queue dans la gamme comprise entre la température du liquide et une température supérieure à celle-ci de 2 °K au plus.

9. Procédé suivant l'une des revendications 1 à 8, caractérisé en ce qu'il consiste à maintenir la durée totale de séjour de particules déterminées de liquide dans la zone initiale et dans la zone de queue à moins de 30 secondes.

10. Procédé suivant l'une des revendications 1 à 9, caractérisé en ce qu'il consiste à dégazer le liquide à traiter dans un étage préalable sous une pression de 60 à 280 mbar et à une température comprise entre 40 et 100 °C, et à l'introduire, avec la teneur en eau de 0,05 à 0,2 % en poids environ qui subsiste dans ces conditions, dans la zone initiale.

11. Procédé suivant l'une des revendications 1 à 10, caractérisé en ce qu'il consiste à effectuer, dans le cas de liquides ayant une proportion particulièrement grande d'acides gras libres et d'autres produits à

**0 101 889**

bas points d'ébullition, immédiatement avant l'entrée dans la zone initiale, un traitement flash en opérant pratiquement sous la même pression que dans la zone initiale, et à séparer et à condenser les vapeurs dégagées lors de la détente.

12. Procédé suivant l'une des revendications 1 à 11, caractérisé en ce qu'il consiste à prévoir une zone de séjour, dans laquelle est envoyé le liquide provenant du bas de la zone initiale et où il est maintenu, sous une pression de 60 à 280 mbar, à la température du bas de la zone initiale précédente, pendant 5 à 60 minutes environ, avant que le liquide ne soit chargé au répartiteur de la zone de queue.

13. Procédé suivant la revendication 12, caractérisé en ce qu'il consiste à introduire dans la zone de séjour une petite quantité de vapeur d'un liquide à bas poids moléculaire, de l'ordre de grandeur de 0,02 à 0,2 % environ en poids du débit de liquide.

14. Procédé suivant la revendication 13, caractérisé en ce qu'il consiste à condenser directement, dans l'eau de refroidissement d'un dispositif de refroidissement par condensation, la vapeur d'entraînement polluée qui se forme dans la zone de séjour.

15. Procédé suivant l'une des revendications 1 à 14, caractérisé en ce qu'il consiste à introduire, dans le bas de la zone de queue, ou dans le liquide qui en est retiré et qui est refroidi partiellement, une petite quantité d'agent complexant.

16. Procédé suivant l'une des revendications 1 à 15, caractérisé en ce qu'il consiste à se servir, comme vapeur, du liquide à bas poids moléculaire, de la vapeur d'eau, notamment de ce que l'on appelle de la vapeur noble qui a été produite à partir d'eau préalablement distillée et dégazée.

17. Installation pour la mise en œuvre du procédé suivant l'une des revendications 1 à 16, caractérisée par deux colonnes à film en chute libre (10, 22) différentes, fonctionnant l'une derrière l'autre et reliées entre elles par des conduits pour de la vapeur et pour du liquide, la colonne à film en chute libre (10) comportant des canaux de ruissellement ayant un diamètre hydraulique de 73 et 150 mm ou son équivalent pour des canaux de ruissellement non tubulaires, et la colonne à film en chute libre (22) comportant des canaux de ruissellement ayant un diamètre hydraulique de 25 à 33 mm ou son équivalent pour des canaux de ruissellement non tubulaires.

18. Installation suivant la revendication 17, caractérisée en ce que les canaux de ruissellement de la colonne à film en chute libre (10) ont une longueur de 2 à 6 mètres, et les canaux de ruissellement de la colonne à film en chute libre (22) ont une longueur de 6 à 10 mètres.

19. Installation pour la mise en œuvre du procédé suivant l'une des revendications 1 à 16, caractérisée par trois colonnes à film en chute libre (44, 10, 22) différentes, fonctionnant l'une derrière l'autre et reliées entre elles par des conduits pour de la vapeur et pour du liquide, la colonne à film en chute libre (44) ayant des canaux de ruissellement d'un diamètre hydraulique de 120 à 150 mm ou son équivalent pour des canaux de ruissellement non tubulaires, la colonne à film en chute libre (10) ayant des canaux de ruissellement d'un diamètre hydraulique de 73 à 120 mm ou son équivalent pour des canaux de ruissellement non tubulaires, et la colonne à film en chute libre (22) ayant des canaux de ruissellement d'un diamètre hydraulique de 25 à 33 mm ou son équivalent pour des canaux de ruissellement non tubulaires.

20. Installation suivant la revendication 19, caractérisée en ce que les canaux de ruissellement de la colonne à film en chute libre (44) ont une longueur de 2 à 3 mètres, les canaux de ruissellement de la colonne à film en chute libre (10) ont une longueur de 3 à 4 mètres, et les canaux de ruissellement de la colonne à film en chute libre (22) ont une longueur de 6 à 10 mètres.

21. Installation suivant l'une des revendications 17 à 20, caractérisée en ce que les canaux de ruissellement d'au moins une colonne à film en chute libre (10, 22, 44), de préférence les canaux de ruissellement de la première colonne à film en chute libre (10 ou 44), sont des tubes d'un échangeur de chaleur sensiblement verticaux et sur lequel le ruissellement s'effectue par l'intérieur.

22. Installation suivant l'une des revendications 17 à 20, caractérisée en ce que les canaux de ruissellement d'au moins une colonne à film en chute libre (10, 22, 44), de préférence les canaux de ruissellement de la première colonne à film en chute libre (10, 44), sont constitués de surface à double enveloppe, à faces parallèles sensiblement verticales et chauffées par l'intérieur, les intervalles entre deux surfaces voisines de double enveloppe étant choisis compte tenu du diamètre hydraulique exigé des canaux de ruissellement.

23. Installation suivant l'une des revendications 17 à 20, caractérisée en ce que les canaux de ruissellement d'au moins une colonne à film en chute libre (10, 22, 44), de préférence les canaux de ruissellement de la première colonne à film en chute libre (10 ou 44), sont constitués de bougies (51) chauffées par l'intérieur et disposées sensiblement verticalement, les intervalles entre des bougies (51) voisines étant choisis en fonction du diamètre hydraulique exigé pour les canaux de ruissellement (Fig. 4).

24. Installation suivant l'une des revendications 17 à 23, caractérisée en ce que la colonne à film en chute libre (22) est une colonne de ruissellement (70) véritable fonctionnant avec une faible perte de charge, sans chauffage des surfaces d'échange à film disposées dans cette colonne (Fig. 5).

25. Installation suivant l'une des revendications 17 à 24, caractérisée en ce que, en parallèle au conduit (17) mettant le bas de la colonne à film en chute libre (10) en communication avec la tête de la colonne à film en chute libre (22), ou en parallèle au conduit (41) mettant le bas de la colonne à film en chute libre (44) en communication avec la tête de la colonne à film en chute libre (10), est montée une cuve de séjournement (19) pouvant être mise en circuit à volonté.

26. Installation suivant la revendication 5, caractérisée en ce que la cuve de séjournement (19) est une colonne à plateaux (80) verticale, à contre-courant, dont les hauteurs des déversoirs (82) sont réglables (Fig. 6).

27. Installation suivant la revendication 25 ou 26, caractérisée en ce qu'un conduit (21) pour les vapeurs se produisant dans la cuve de séjournement (19) conduit, en passant à côté des étages de compression (16, 16a) du système produisant le vide, à un dispositif de refroidissement avec condensation (31).

28. Installation suivant l'une des revendications 17 à 27, caractérisée en ce qu'entre l'échangeur de chaleur à température élevée (9) et la première colonne à film en chute libre (10), une zone de détente est réalisée dans une cuve (46).

29. Installation suivant la revendication 28, caractérisée en ce que la cuve (46) est disposée au-dessus de la première colonne à film en chute libre (10 ou 44), de sorte que le mélange ayant subi la détente parvienne, simplement sous l'effet de son propre poids, au répartiteur de la première colonne à film en chute libre (10 ou 44).

30. Installation suivant la revendication 28 ou 29, caractérisée en ce que les vapeurs soutirées de la cuve de détente (46) peuvent être envoyées par un conduit (47) au bas du système de condensation (12).

31. Installation suivant l'une des revendications 17 à 30, caractérisée en ce que l'ensemble des colonnes à film en chute libre est intégré en une unité (90) et communiquent entre elles par des joints soudés coniques (Fig. 7).

32. Installation suivant la revendication 31, caractérisée en ce que, dans l'unité de colonnes (90), est intégrée également la cuve de détente (46).

Fig.1

Fig. 1a

Fig. 2

0 101 889

Fig. 3

61

55

56

57

51

50

53

58

52

54

60

59

Fig. 4

52

54

Fig. 5

74

71

72

70

73

75

LIC

V5

## Fig.6

## Fig.7